(19) Europäisches Patentamt
European Patent Office
Office européen des brevets

(11) **EP 3 767 481 A1**

(12) **EUROPÄISCHE PATENTANMELDUNG**

(43) Veröffentlichungstag:
**20.01.2021 Patentblatt 2021/03**

(51) Int Cl.:
**G06F 15/173** (2006.01)   **G06F 15/80** (2006.01)
**G06F 12/02** (2006.01)

(21) Anmeldenummer: **19187372.8**

(22) Anmeldetag: **19.07.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **PLS Patent-, Lizenz- und Schutzrechte Verwertung GmbH**
**6330 Cham (CH)**

(72) Erfinder: **Probst, Benjamin Elias**
**D-01217 Dresden (DE)**

(74) Vertreter: **Kaminski Harmann Patentanwälte AG Landstrasse 124 9490 Vaduz (LI)**

(54) **PROZESSOR**

(57)   Die Erfindung betrifft eine Mikroprozessorarchitektur (1) eines Digitalrechners, welche eine Mehrzahl von Rechenstufen (5), jeweils ausgebildet mit einer Recheneinheit mit zumindest einem Rechenkern zur mathematischen oder logischen Verarbeitung von Daten entsprechend eines Befehlssatzes, und einer Management Unit (4) (MU), welche die Daten und einen Programmcode für die Recheneinheit 3 bereitstellt, ausgebildet ist.

Die Rechenstufen (5) sind dabei derart angeordnet und ausgebildet, dass mittels der Management Units (4) eine Datenkommunikation zwischen den Rechenstufen (5) in einem geschlossenen Ring erfolgt. Die Architektur weist weiterhin einen zentralen Prozessorkern (6) mit einer Steuer-CPU (2) (CCPU) auf, welcher sternförmig mit jeder der Rechenstufen (5) über deren MU (4) verbunden ist. Dabei ist die CCPU derart ausgebildet und konfiguriert, um den Programmcode und diesem zugehörige Daten aus einem externen Speicher (9) über die MUs (4) derart auf die Mehrzahl von Rechenstufen (5) zu verteilen, dass bei der Verarbeitung des Programmcodes aufeinanderfolgende, abhängige Berechnungen jeweils auf im Ring aufeinanderfolgende Rechenstufen verteilt werden, und die zu verarbeitenden Daten im Ablauf deren Berechnungen in dem geschlossenen Ring von einer Rechenstufe zu einer Nächsten im Ring weitergeleitet werden.

Fig. 2

**Beschreibung**

Die Erfindung betrifft einen eine Prozessorarchitektur bzw. einen mit einer solchen Prozessorarchitektur aufgebauten Prozessor nach dem Oberbegriff des Anspruchs 1 bzw. des Anspruchs 12, sowie ein Verfahren zur Datenverarbeitung in einem Prozessor nach Anspruch 13.

Anforderungen bezüglich der Verarbeitungsgeschwindigkeit von Programmen und/oder Daten durch Prozessoren oder Digitalrechnern, wie z.B. CPUs (Central Processing Units), DSPs (Digital Signal Processors), MCU (Micro Controller Units), GPUs (Graphical Processing Units), TPUs (Tensor Processing Units), etc. steigen ständig. Dabei stoßen Prozessorarchitekturen immer wieder an ihre physikalischen Grenzen. Diese Prozessorarchitekturen werden dabei meist primär durch Erhöhung der Taktfrequenz der Prozessoren, Verkleinerung der Strukturgrößen sowie einer parallelen Nutzung mehrere Prozessorkerne verbessert. Auch durch architektonische Optimierung der Ablaufsteuerung in Dingen wie z.B. Pipelining und Parallelität, Vorhersagen beim Speicherzugriff, Caching, Nachrichtensysteme, oder nach dem Teile-und-herrsche-Ansatz in Ihrer Leistungsfähigkeit verbessert. Beispiele für derartige verbesserte Prozessorarchitekturen finden sich etwa in US 4 644 466, US 5 289 577, US 7 454 411, US 4 972 338, US 5 907 867, US 6 115 814, US 2011/231 857, US 5 689 679, US 5 724 406, US 6 374 286, US 5 815 727, US 5 706 466, US 7 653 906, US 2004/111546, DE 37 07 585, etc.

Besonders Vorhersagen und davon abhängiges Caching brachten dabei durchaus eine Beschleunigung bei einer Vielzahl von Programmabläufen. Auf der anderen Seite können dabei aber falschen Vorhersagen beim Caching mit mehreren Cache-Stufen für Rechenprozesse manche der Vorteile schnell wieder zunichtemachen, da sich deren Behebung durchwegs zeitaufwendig gestalten kann. Auch entstanden damit zuvor unbekannte, und kaum oder nur Aufwändig mittels Software behebbare Sicherheitsprobleme bei derartigen Architekturen.

Für die Berechnung und Simulation technischer und besonders chemischer Prozesse mit vielen zu modellierenden Berechnungsobjekten (z.B. Atome und Moleküle, Digital Twins, Finite Elemente, etc.) oder für die Quantenmechanik mit vielen verschiedenen richtigen Ergebnissen im Bereich der komplexen Zahlen, ist es vorteilhaft eine Rechnerarchitektur zu erschaffen, welche auf ein Rechenobjekt viele Rechenvarianten parallel (Multiple Instruction Single Data - MISD) und verzweigt im selben Thread ausführen kann. Dabei kommen vielfach Großrechner-Anlagen mit einem Netzwerk von hunderten und tausenden Einzelprozessoren zum Einsatz, beispielsweise der "Earth Simulator", "Alpha-Go" oder andere, aber auch hochspezialisierte Rechenanlagen wie die "Connection Machine" CM-1, CM-2 und CM-5, die "MasPar" MP-1 und MP-2, Berkeley Emulation Engine (BEE) oder andere Lösungen aus Berkeleys RAMP (Research Accelerator for Multiple Processors), Cray-Rechner wie der T3E mit seiner GigaRing-Architektur, etc. Auch in der Bildverarbeitungs- und bei Deep-Learning- Architekturen wird teilweise auf massive Parallelität gesetzt, sowie im kleineren Maßstab auch bei Transputern und Vektor- oder Feldrechnern.

Nicht zuletzt aufgrund von Skalierungseffekten haben sich aber vermehrt Prozessoren mit General Purpose Architekturen wie z.B. die Intel Xeon oder Core-i Serie oder Prozessoren von AMD, ARM oder Nvidia durchgesetzt, welche meist auf der Von-Neumann-Architektur und Harvard-Architektur basieren, und auf einer primär sequentiellen Abarbeitung beruhen. An diesem Grundprinzip ändert auch ein z.B. in der Cell- oder Sandy-Bridge Architektur primär im Sinne einer besseren Skalierbarkeit eingeführte Ringbus nichts. Ein Problem bei Von-Neumann-Architekturen liegt darin, dass alle Daten, sowohl Wörter, als auch Befehle geladen und die Ergebnisse sofort gespeichert werden müssen, um wieder verfügbar zu sein. Dabei bilden verschiedene Ebenen an kleineren Caches den Speicher jedes CPU-Kerns und ein größerer RAM den gemeinsamen Speicher aller Kerne. Ein Flaschenhals liegt dabei oft an der Stelle zwischen dem RAM und den höheren Cache Ebenen, speziell, wenn neue Daten in einen höheren Cache geladen werden müssen oder Speicher-Seitenwechsel auftreten.

Klassische RISC Architekturen sind z.B. definiert durch den Kontrollfluss-Ablauf: Instruction Fetch, Instruction Decode, Instruction Decode/Execute und Memory/WriteBack. Bei parallelen Multiprozessor-Architekturen arbeitet meist jeder CPU Kern einzeln einen Thread in einem Prozess ab oder es teilen sich zwei Threads eine gemeinsame Rechnereinheit (z.B. bei Hyperthreading) und je nach Prozesszugehörigkeit auch einen gemeinsamen Adressraum. Parallelstrukturen werden allenfalls z.B. bei einer Verarbeitung von Datenfeldern in einem Feldrechner oder Vektorrechner eingesetzt, wobei aber der Operand für alle Daten derselbe ist. Auch bei GPU Prozessoren bekommt jeder Kern eine ähnliche Aufgabe zugeteilt. Die GPU hat hierfür sehr viele, eher einfach gehaltener Kerne, die Befehle von einer flacheren Speicherhierarchie beziehen und welche sozusagen als riesige Feldrechner verwendet werden, deren Kontrollfluss hochparallel ist. Jedoch ist der Kontrollfluss dabei parallel abhängig und somit für alle Daten im Wesentlichen gleich. In einer RISC Architektur ist es nur begrenzt möglich zwei laufende Threads und deren Kontrollfluss derart zu verschränken, dass die Weiterbearbeitung eines Gesamtprozesses mit mehreren Threads und mit mehreren Verzweigungen innerhalb derer oder gar mehrerer verschiedener Befehle ab einem Programmbruchpunkt übergangslos und insgesamt ohne Leistungseinbußen verarbeitet wird - egal wie viele Verzweigungen im Baum noch auftreten und vorausberechnet werden. Eine dabei auftretende, virtuelle Nebenläufigkeit von Threads ist in Wahrheit eine sequentielle Abarbeitung innerhalb sequentieller Prozesse, auch wenn ein Prozess inzwischen durch Threads auf mehreren Prozessorkernen verarbeitet werden kann. Um Daten ablaufsicher aufteilen zu können, sind dabei Mutex-Funktionen oder Semaphoren erforderlich, sodass immer nur ein Thread auf ein Datenfeld zugreifen kann und damit eine Eineindeutigkeit des Ergebnisses gewährleistet ist. Dieses erschwert, komplexere reale Vorgänge und Prozesse zu modellieren, die sowohl natürlichen Vorgängen entsprechen, als auch technisch mit bekannten, einfachen Verfahren realisierbar sind. In der Realität können oft mehrere Ursachen zu einer Reaktion führen, sowie auch eine Ursache zu mehreren Reaktionen führen kann. Für ein derartiges, bijektives Problem ist eine solche Architektur aber nicht ausgelegt.

So sind etwa bei einer RISC Architektur - beispielsweise bei der Modellierung von Milliarden Molekülen - sehr viele zeitaufwändige Speicherzugriffe und Verzweigungen nötig, um eine solch große Aufgabenkomplexität sequentiell nach dem RISC-Ablauf zu lösen. Die sequentielle Abarbeitung ist zum einen langsam, und speziell bei einer falsch angenommenen Verzweigung bei derart kurzen Rechensequenzen und vielen Verzweigungen, wird der Prozess noch weiter verlangsamt. Die Kooperation zwischen parallel arbeitenden Prozessoren kann dabei nicht effektiv stattfinden, weil die Berechnung der Einflüsse zwischen zwei Molekülen immer zusammenhängen und sich gegenseitig beeinflussen.

Speziell wenn nur kleine Codeabschnitte berechnet werden und die Befehle nicht gleichgeschalten werden können, muss die Verschränkung der Prozesse in einem Multicore Prozessor ständig warten und z.B. durch sogenannte Abstraktionen-Labels synchronisiert werden. Speziell, wenn die Manipulation von Zuständen nur ein sehr kleines Objekt betrifft und für viele Teilobjekte individuell ist, können auftretende Muster auch nicht intelligent erkannt und für die Nutzung ausgewertet werden um den Vorgang zu beschleunigen. Ein ähnliches Problem findet sich auch bei Nutzung einer GPU für eine solche Aufgabe. Die GPU kann zwar viele ähnliche Rechenoperationen an einem großen Datenfeld parallel durchführen, jedoch unterstützt deren Spezifikation keine derart kleinteiligen Verzweigungen, Abhängigkeiten und Interaktionen zwischen den Daten und GPU-Kernen in effizienter Weise.

Problembereiche bekannter Architekturen sind dabei z.B. die Daten-/Datenstrom-, Prozess- und Threadstromzuordnung, die Speicherverwaltung, die "Out of order execution" mit ihrem Puffer, aufgrund von nicht echtzeitgetreuem pipelining, und zu flachen Verzweigungsberechnungen. Weiterhin kann die Kommunikation und Beeinflussung zwischen winzigen Teil-Threads nicht effektiv erfolgen und verursacht ständige Aufrufe des Betriebssystems.

Es ist dabei eine Aufgabe der vorliegenden Erfindung, einen verbesserten Prozessor mit einer verbesserten Prozessorarchitektur bereitzustellen, insbesondere für eine parallele Abarbeitung von Problemen, welche auch vielfältig verzweigt sind und/oder miteinander interagierende Teilberechnungen aufweisen. Dabei sollen die bekannten Konzepte CPU-RISC, GPU und neuronaler Rechner verbessert werden, insbesondere im Hinblick auf Anwendungen, in welchen sehr viele kleine Teilprobleme, sowie Probleme verzweigter Baumstrukturen zu lösen sind. Insbesondere Stillstände und Wartezeiten der Rechenkerne sollten mit der erfindungsgemäßen Struktur reduziert werden. Neben der hierzu nötigen Architektur soll dabei auch eine entsprechende Methode zum vorteilhaften Betrieb sowie zur Abarbeitung von Programmcode in einer derartigen Architektur bereitgestellt werden.

Es ist dabei speziell eine Aufgabe, eine Prozessorarchitektur bereitzustellen, welche eine effiziente Parallelverarbeitung bereitstellt. Insbesondere betrifft diese Prozessorarchitektur eine Mikroprozessor- oder CPU-Architektur, welche vorzugsweise auf Chip-, Die- oder Halbleiter-Ebene ausgebildet ist.

Diese Aufgaben werden erfindungsgemäß durch die Merkmale der unabhängigen Ansprüche und/oder durch Merkmale der abhängigen Ansprüche gelöst bzw. diese Lösungen weitergebildet.

Ein Problem der gängigen Rechnerarchitekturen ist oft eine fehlende Flexibilität, speziell für die dargelegten Aufgaben in Bereichen wie Simulationen von komplexen realen Vorgängen. Die vorliegende Erfindung schlägt dabei eine Rechnerarchitektur vor, die mindestens einen Prozessorkern aufweist und ringförmig Rechenstufen aus Rechenelementen wie ALU, FPU, Feldrechner oder Vektorrechnern mit einer Weitergabe von Information in einem geschlossenen Kreis ausbildet.

Bezüglich des Prozessorkerns hängt dabei die Parallelität der Abarbeitung auf dieser Ebene nicht mehr zwingend mit einer Struktur von mehreren parallelen, vollwertigen Kernen zusammen, womit vorzugsweise auch eine (im Stand der Technik teils exzessive) Kommunikation zwischen diesen vollwertigen Kernen entfallen kann.

Mehrere der parallel arbeitenden Rechenstufen sind dabei über Datenverbindungen in einer Ringstruktur, vorzugsweise direkt, miteinander verbunden um den Prozessorkern angeordnet, sodass ein, vorzugsweise direkter, Datenaustausch zwischen den Rechenstufen erfolgen kann. Dabei weist in der Ringstruktur jede der Rechenstufen eine Management Unit auf, welche den Datenfluss zwischen den Rechenstufen, des Prozessorkerns und allenfalls auch Cache-Speichern im Slave-Modus unter dem zentralen Prozessorkern verwaltet.

Eine erste Leistungssteigerung kann hierbei unter anderem durch Zentralisierung auf einen Prozessorkern erreicht werden, wobei eine sehr einfache, jedoch vollwertige, integrierte Steuer-CPU als Herz des Prozessorkerns - im Weiteren auch als CCPU ("Control CPU") bezeichnet - ausgebildet sein kann. Diese CCPU kann beispielsweise mit einem einfachen RISC Befehlssatz und möglichst hoher Taktrate ausgebildet sein. Die Steuer-CPU kann dabei speziell derart ausgebildet sein, dass diese im Aufbau nicht den Ansatz erweiterter Rechenkapazitäten ausgerichtet ist, sondern beispielsweise auf Reaktionsgeschwindigkeit, Datendurchsatz und/oder Energieeffizienz optimiert ist.

Eine der Haupttätigkeiten einer erfindungsgemäß ausgebildeten CCPU sind dabei eine Weiterleitung der ständig fließenden Datenströme über ein Füllen von Befehls-Puffern zu koordinieren, eine Speicherung fertiger Ergebnissätze sowie ein Laden, ein Setzen von Operationen durch Interrupts und Systemaufrufe, sowie eine Steuerung einer dynamischen Weiterleitung des Datenflusses einer Rechenstufe z.B. bei statischen Feld-Weg-Berechnungen. Eine Tätigkeit der CCPU ist dabei, die Programmbefehle eines auszuführenden Programms zu verteilen, beispielsweise ähnlich wie bei der Anwendung eines Clock-Algorithmus für ein Paging, die Befehle nacheinander auf die Puffer und in der Folge auf Stacks der Rechenstufen zu legen und in Echtzeit zu verwalten, zu ersetzen oder zu löschen, also speziell im oder entgegen des Uhrzeigersinns in der ringförmigen Anordnung dieser. Dabei kann diese ringförmige Anordnung je definiertem Rechenring eine einheitliche Richtung aufweisen, jedoch können in der Regel auch Ringe mit entgegengesetzten Richtungen je weiterer organisiertem Ring ausgebildet sein, etwa bei Multiple-MISD in einem Prozessor. Die CCPU Kommuniziert im Fall von Multiple-MISD mit den anderen CCPUs über Busse bekannter Art, z.B. ähnlich wie in klassischen RISC MIMD Architekturen. In speziellen Ausführungsformen sind allerdings auch hybride Technologien mit einer CCPU und mehreren Ringen unterschiedlicher Richtungen realisierbar, um einen Vollduplexring zu erstellen und einen Duplex allgemein zu ermöglichen.

Eine weitere Tätigkeit, welche in der erfindungsgemäßen Prozessorarchitektur von einer entsprechend ausgebildeten CCPU übernommen werden kann, ist ein Starten und Stoppen von Verarbeitungsvorgänge - auch in Bezug zur Flusskontrolle - und/oder ein Aufnehmen von Fehlermeldungen (Exceptions) aus den Rechenwerken, sowie gegebenenfalls ein Ausführen von Fehlerprogrammen, welches vorzugsweise unabhängig von allen derzeit fortlaufenden Rechenstufen ausgeführt wird. Die gesamte erfindungsgemäße Rechnerarchitektur muss damit so gut wie nie anhalten oder Seiten vollständig präemptieren.

Die Parallelität der Abläufe findet dabei erfindungsgemäß in den Einzelrechenstufen der umliegenden Rechenelemente statt und bedient sich einer Verkettung aufeinanderfolgender Befehle und Programmabschnitte über die Funktionalitäten, die in jeder der Rechenstufen eingesetzt werden, in Kombination mit einer Mehrfachnutzung und koordiniertem Datenflussanschluss derselben und Nutzung der in der Rechenstufe enthaltenen oder nachfolgenden ALUs, FPUs, etc.

Anders ausgedrückt entsteht somit aus einem Input ein Output - ähnlich wie bei einer Logikschaltung in einem FPGA Chip. Die Verwaltung eines solchen Input-Output eines erfindungsgemäßen Prozesses (Vergleichbar mit dem auf höherer Abstraktionsebene in reiner Software realisieren UNIX Prinzip) muss nun erfindungsgemäß aber nicht mehr direkt vom einem Betriebssystem behandelt werden, sondern findet primär auf der erfindungsgemäßen Hardware statt, womit z.B. deutlich kürzere Zugriffszeit realisierbar sind.

Eine Ausführungsform einer erfindungsgemäßen Rechnerarchitektur kann auch als eine Dezentralisierung des Rechenkerns in einen Rechenring beschrieben werden, wobei die wichtigste Ausführungshardware für die eigentlichen Berechnungen immer explizit mehrfach direkt und indirekt parallel und verteilt vorliegt. Somit können je allgemeiner Rechenstufe mit ihren Rechenelementen mehrere Befehle gleichzeitig in den Recheneinheiten abgearbeitet werden. Ähnlich wie bei einem RISC-V Ansatz können dabei beispielsweise auch mehrere RISC Befehle aus sogenannten "Standardkombinationsbefehlen" oder Standard Combination Execution - (SCE) durch ein Microprogramm je Rechenstufe decodiert werden, wodurch die mögliche Darstellungskomplexität und Rekombinierbarkeit für die nächste Stufe am Ausgang für Immediate Operationen erhöht wird. Weiterhin entsteht durch das damit mögliche Verketten, oder bei einem Stall Bypassing zu sich selbst, eine Art variable, in Echtzeit rekombinierbare und längenveränderbare Pipeline.

Eine Wegeleitung der Daten im Ring kann in Echtzeit durch die erfindungsgemäße - vorzugsweise als Echtzeitprozessor ausgebildete - Steuer-CPU mit einem oder mehreren eigenen Steuer-CPU-Kernen aus einem Befehls-Maschinencode interpretiert werden. Dabei können speziell Operationen aus dem CISC und/oder RISC Datensatz sowie die Erweiterung dessen durch vorprogrammierbare "Standardkombinationsbefehle" befohlen werden, beispielsweise unter anderem:

- bedingte Sprünge zu nachfolgenden Recheneinheiten einer definierten Rechenstufe mit multiplexer Verzweigung;
- Schleifen über Rücksprünge auf den nächsten Befehl enthaltende Rechenstufe;
- Verzweigung des Datenstroms auf mehrere Einheiten;
- Zusammenführung startverwandter Rechenströme auf eine Listenverkettung oder mehrdimensionale Felder;
- Immediate Operationen auf unmittelbaren Output
- etc.

Diese Befehle können entweder als unter RISC bekannte 3 Adressbefehle mithilfe aktiver Koordination, oder aber erweitert als 4 oder 5 oder 6 - Adressbefehle z.B. in der Form {w1, w2, Ergebnis, physikalische Ziel Input Adresse Rechenstufe, <Registernummer Zielbefehl>, <Thread ID>} mit passiver Koordination der CCPU ausgelegt sein.

In einer beispielhaften Ausführungsform ist ein erfindungsgemäße Gesamtprozessor dabei mit einer Anzahl N von Armen oder Rechenstufen ausgebildet.

Die vorliegende Erfindung betrifft dabei speziell eine Mikroprozessorarchitektur eines Digitalrechners, insbesondere ausgebildet auf einem, vorzugsweise einzigen, Halbleiter-Chip. Diese weist dabei eine Mehrzahl von, vorzugsweise gleichartigen, Rechenstufen auf, welche jeweils ausgebildet sind mit einer Recheneinheit mit zumindest einem Rechenstufen-Dekodierkern, welcher zur mathematischen oder logischen Verarbeitung von Daten entsprechend eines Befehlssatzes ausgebildet ist, insbesondere eines in der Regel erweiterten RISC-Befehlssatzes, und einer Management Unit (MU), welche ausgebildet ist, um die Daten und einen Programmcode für die dieser zugeordneten Recheneinheit bereitzustellen.

Dabei sind die Rechenstufen derart angeordnet und ausgebildet, dass mittels der Management Units eine Datenkommunikation zwischen den Rechenstufen in einem geschlossenen Ring ausgebildet ist, insbesondere in einem geschlossenen Daisy Chain Ring mit Punkt-zu-Punkt-Verbindungen zwischen den Management Units. In speziellen Ausführungsformen können dabei auch Punkt-zu-Mehrpunkt-Verbindungen ausgebildet sein.

Die Mikroprozessorarchitektur, weist zudem einen zentralen Prozessorkern mit einer Steuer-CPU (CCPU) auf, welcher sternförmig mit jeder der Rechenstufen über deren MU verbunden ist. Dieser ist derart ausgebildet und konfiguriert, um den Programmcode und diesem zugehörige Daten aus einem externen Speicher über die MUs derart auf die Mehrzahl von Rechenstufen zu verteilen, dass bei der Verarbeitung des Programmcodes aufeinanderfolgende, abhängige Berechnungen jeweils auf im Ring aufeinanderfolgende Rechenstufen verteilt werden, und die zu verarbeitenden Daten im Ablauf deren Berechnungen in dem geschlossenen Ring von einer Rechenstufe zu einer Nächsten im Ring weitergeleitet werden. Die CCPU ist also ausgebildet, um den Programmcode und diesem zugehörige Daten aus einem externen Speicher über die Management Units derart nacheinander auf die Mehrzahl von Rechenstufen zu verteilen, dass bei der Verarbeitung des Programmcodes die zu verarbeitenden Daten im Ablauf deren Verarbeitung in dem geschlossenen Ring von einer Rechenstufe im Ring einer nächsten Rechenstufe weitergeleitet werden.

Dabei kann aus dem Programmcode eines einzelnen Threads ein erster Befehl auf einer ersten der Rechenstufen ausgeführt werden und ein nachfolgender zweiter Befehl auf einer zweiten der Rechenstufen (bzw. nur in Spezialfällen - wie z.B. einer eingliedrigen Schleife, etc. - auf derselben Rechenstufe) ausgeführt werden, wobei Daten eines Zwischenergebnisses zwischen der ersten und zweiten Rechenstufe weitergeleitet werden. In anderen Worten verteilt die vorliegende Erfindung einen Programmcode mit Befehlen, welche Eingangsdaten zu Ausgangsdaten verarbeiten, wobei die Befehle derart über die Rechenstufen verteilt sind, dass die Ausgangsdaten eines ersten Befehls auf einer ersten der Rechenstufen über den Ring als Eingangsdaten für einen zweiten Befehl auf einer im Ring mit dieser verbundenen, zweiten der Rechenstufen übergeben werden. Für Ausnahmen wie Iterationen können optional auch zwei dekodierte und dadurch mehrere aufeinanderfolgende ausgeführte Befehle auf derselben Rechenstufe per Direktbeipass erlaubt sein. Eine Abarbeitung des Programmcodes erfolgt sozusagen sukzessive entlang des Rings, wobei die zu verarbeitenden Daten jeweils - z.B. in Form eines Datenstroms im direkten Bytestromformat oder in Seiten(-feldern) - sukzessive entlang des Rings zwischen den Rechenstufen weitergereicht werden, sodass der Ablauf von Schritten des Programmcodes verteilt über die Rechenstufen mit einer Weitergabe der zu verarbeitenden Daten entlang des geschlossenen Rings von einer Rechenstufe zu einer nächsten Rechenstufe erfolgt. Insgesamt können zwischen zwei Rechenstufen mehr Busse als 1:N Verbindungen realisiert sein, um Seiten über längere Zeiträume hochparallel und durch die MU gesteuert, in ein reserviertes L4 Cache - Feld der nächsten Rechenstufe zu laden, während weiterhin einzelne Bytestromdaten fließen, also ohne dabei das System zu blockieren.

In einer Ausführungsform können die MUs dabei jeweils mit einer Paged Memory Management Unit (PMMU) und einem individuellen L4 Cache Speicher ausgestaltet sein, welche derart ausgebildet sind, dass diese, vorzugsweise unabhängig von der Recheneinheit, insbesondere im Falle eines Thread-Wechsels, temporär von der Recheneinheit nicht benötigte Speicherseiten in den individuellen Cache Speicher auslagern und/oder benötigte Speicherseiten aus dem individuellen Cache Speicher nachladen, die z.B. aus einem Register der vorhersehungsweise als nächstes über die Daten auszuführenden Befehlen bestehen kann.

In einer Ausführungsform kann die CCPU über die MUs die Speicherseiten in den jeweiligen individuellen Cache Speicher proaktiv, entsprechend der Verteilung des Programmablaufs, mit einem entsprechenden Teil des Programmablaufs und/oder der Daten vorab vorladen, insbesondere unabhängig von der Abarbeitung des Programmablaufs durch die Recheneinheit und von der Weiterleitung der Daten zwischen den Rechenstufen.

Die CCPU kann zumindest ein Level an lokalem Cache-Speicher aufweisen, vorzugsweise zwei oder drei oder mehr Level an lokalem Cache-Speicher, und die CCPU kann mit einem spezialisierten Prozessorkern ausgebildet sein, dessen Befehlssatz derart ausgebildet ist, dass dieser zur schnellen Verwaltung und zum Transfer von Daten optimiert ist. Speziell kann die CCPU ohne Rechenkerne zur direkten Verarbeitung der Daten und zur Ausführung des Programmcodes an sich ausgebildet sein. Speziell kann der Befehlssatz als RISC-Befehlssatz zur Verteilung von Programmcode und Daten auf die Recheneinheiten unter Berücksichtigung von Branche-Predictions im Programmablauf ausgebildet sein.

Je nach Ausführungsform ist eine der Recheneinheiten dabei ausgebildet mit zumindest einem Rechenkern von

- einer Arithmetic Logical Unit (ALU)
- einer Floating Point Unit (FPU),
- einer Feldrechner Unit (FR) und/oder
- einer Logischen Einheit (LE).

Die Recheneinheit ist dabei des Weiteren ausgebildet mit einer Execution Engine (EE), welche zum Laden der Registersätze der Rechenkerne von einem lokalen Stack ausgebildet ist, und optional mit einer Interpreting Engine (IE), welche zum predecodieren von komplexen Standardkombinationsbefehlen in atomare Befehle des Rechenkerns ausgebildet ist. Dabei weist jeder Rechenarm zumindest eine EE auf. Insbesondere kann in einer speziellen Ausführungsform dabei auch für jeden der Rechenkerne jeweils ein Execution Engine (EE) und/oder ein Interpreting Engine (IE) ausgebildet sein. Die EE und optional auch die IE sind, vorzugsweise über einen gemeinsamen internen Bus der jeweiligen Rechenstufe miteinander und mit der zugehörigen MU verbunden. Dieser interne Bus ist aber über die MU getrennt vom Ring ausgebildet. In einer bevorzugten Ausführungsform kann eine solche IE dabei ein Teil einer Rechenstufe sein, insbesondere als ein Detail einer Verarbeitungsebene der MU. In der Rechenstufe interpretiert die IE Befehle der über den Ring konfigurierten MU, und legt gegebenenfalls auch mithilfe der EE dekodierte Befehle auf die Rechenwerke. Die IE kann dabei auch die Aufgabe übernehmen, komprimierte Befehle - sogenante SCE-Befehle - durch in ihren Seiten abgespeicherte, oft verwendete Funktionsketten in Maschinencode wiederzugeben, z.B. in Form von Microcode. Die bekannten Funktionsketten sind hierbei meist nur ein paar Befehle lang, und können über einen Kommunikationsbus der MU-an im Ring nachfolgende MU übertragen und - z.B. mit einer von hinten abgearbeiteten, verketteten Liste - auf die nachfolgenden MU gelegt werden. In einer anderen Ausführungsform kann eine IE zusätzlich oder alternativ auch Teil der CCPU sein, sodass die CCPU (zumindest teilweise schon) oft verwendeten Befehlsketten korrekt verteilt einsetzt, anstatt die Befehlsketten durch eine MU an eine im Ring folgende MU weiterzugeben.

Die Prozessorarchitektur kann dabei vorzugsweise derart ausgebildet und konfiguriert sein, dass beim Programmablauf ein, im Wesentlichen kontinuierlicher, Datenfluss der zu verarbeitenden Nutzdaten entlang des Rings zwischen den Rechenstufen erfolgt, sowie, im Wesentlichen unabhängig davon, ein Steuerfluss von der CCPU zu den Rechenstufen. Dabei kann beispielsweise die MU derart ausgebildet sein, den Datenfluss und den Steuerfluss weiterzuleiten, wobei die MU, insbesondere mit einem Mikroprogrammcode auf einer Steuerlogik oder auf einem aktualisierbaren FPGA Chip, eine Verwaltung und Koordination von Datenfluss und den Steuerfluss über die Kommunikation mit der CCPU, jeder IE und IE, sowie der Rechenstufe aufgrund des Programmcodes eines auszuführenden Programmes bereitstellt.

Die MU kann dabei speziell derart ausgebildet und konfiguriert sein, um fortlaufend in einem lokalen Programm-Cache jene Befehle des Programmcodes zu markieren, für welche die zu deren Bearbeitung benötigten Daten in einem lokalen Daten-Cache eingetragen sind, und diese markierten Befehle mit den benötigten Daten dann der Recheneinheit zur Ausführung in einem lokalen Stack bereitzustellen. Insbesondere können dabei die markierten Befehle von einer oder mehreren ansässigen EE der Recheneinheit bzw. der MU der Rechenstufe in den lokalen Stack eines für den jeweiligen, markierten Befehl ausgebildetes Rechenwerks geladen werden. Dabei werden speziell einzelne Befehle, nicht gesamte Threads markiert. Die einzelnen Befehle könne dabei also in Ihrer Ausführung - je nach Datenverfügbarkeit und Nachgewiesener weiter bestehender Korrektheit des Codes - auch Threadübergreifend beliebig durchmischt sein.

In einer Ausführungsform kann die Rechenstufe dabei derart ausgebildet und konfiguriert sein, dass diese einen Befehls-Stack aufweist, welcher von der CCPU befüllt und von der Recheneinheit unter Koordination der MU abgearbeitet wird, und eine Eingangs-Daten-Cache welcher initial von der CCPU und während der Ausführung des Programmcodes über den Ring von einer anderen Rechenstufe befüllt und von der Recheneinheit abgearbeitet wird. Dabei kann die MU mit einem Suchlauf ausgebildet sein, welcher jene Befehle im Befehls-Stack, zu welchen Befehlen sich alle erforderlichen Daten im Daten-Stack befinden, der richtigen Recheneinheit bereitstellt, insbesondere mittels der Execution Engine (EE).

Eine Ausführungsform der CCPU kann dabei derart ausgebildet und konfiguriert sein, dass diese Befehls-Maschinencode des Programmcodes aus dem Speicher interpretiert und das Verteilen des Programmcodes auf die Rechenstufen, anhand von bedingten Sprünge zu nachfolgenden Rechenstufen mit multiplexer Verzweigung; Schleifen über Rücksprünge auf den nächsten Befehl enthaltende Rechenstufe; Verzweigung des Datenstroms auf mehrere Einheiten oder Zusammenführung startverwandter Rechenströme auf eine Listenverkettung erfolgt.

In anderen Worten betrifft die Erfindung eine Digitalrechner-Prozessorarchitektur, insbesondere auf einem einzigen Chip oder Die, welche ausgebildet ist mit, einer zentralen Steuer CPU (CCPU) und einer Mehrzahl von Rechenstufen. Dabei sind alle Rechenstufen sternförmig an die zentrale CCPU angebunden und die Rechenstufen untereinander in einem geschlossenen Daten-Ring jeweils miteinander verbunden. Die Rechenstufen weisen dabei eine Management Unit (MU) auf, welche zur Verwaltung und Weiterleitung von Programmcode und Daten zwischen den Rechenstufen und/oder der CCPU ausgebildet und konfiguriert ist. Die CCPU ist derart ausgebildet und konfiguriert, dass diese einen Programmcode, insbesondere innerhalb eines einzelnen Threads, zur Ausführung aus einem externen Speicher an die Rechenstufen derart verteilt, dass eine erste Teilberechnung des Programmcodes an eine erste der Rechenstufe und eine darauffolgende zweite Teilberechnung an eine, im Ring auf die erste folgende, zweite der Rechenstufe verteilt wird, und wobei MU derart konfiguriert ist, dass Ergebnisdaten der ersten Teilberechnung als Eingangsdaten für die zweite Teilberechnung im Ring zwischen den Rechenstufen weitergegeben werden.

Die Erfindung betrifft auch einen Mikrochip oder Prozessor, z.B. als Die, Halbleiter-Chip, Mikroprozessor-Chip, ausgebildet mit einer hier beschriebenen Mikroprozessorarchitektur.

In gleicher Weise betrifft die Erfindung auch ein Verfahren zur Ausführung eines, insbesondere parallelen und verzweigten, Programmcodes auf einem Digitalrechner, insbesondere mit einer hier beschriebenen Prozessorarchitektur. Das Verfahren weist dabei zumindest auf:

- Ein Einlesen des Programmcodes und Initialdaten vom einem externen Speicher durch eine Steuer-CPU.
- Ein Analysieren und Verteilen von Teilen des Programmcodes und der Initialdaten auf mehrere Rechenstufen, welche unter sich zu einem geschlossenen Ring verbunden sind. Das Verteilen erfolgt dabei über eine direkte Verbindung zwischen der Steuer-CPU und einer jeden der MU der Rechenstufen. Dabei erfolgt das Verteilen des Programmcodes derart, dass voneinander abhängige, aufeinanderfolgende Berechnungen auf Rechenstufen verteilt werden, welche im Ring aufeinanderfolgen, und
- Ein paralleles Ausführen der Berechnungen in den Rechenstufen in dem geschlossenen Ring, wobei ein Übergeben der, von einer Rechenstufe berechneten Ergebnisse als Zwischenergebnisse an eine folgende Rechenstufe (und so fort) erfolgt, welche diese Zwischenergebnisse mit dem ihr verteilen Teil des Programmcodes weiterverarbeitet. Das ausführen erfolgt dabei insbesondere unabhängig von der CCPU.
- Ein Zurücklesen von Endergebnissen und/oder Fehlermeldungen des Ausführens des Programmcodes von den Rechenstufen und ein Ablegen dieser in den externen Speicher durch die CCPU mithilfe der MU im Slave-Modus.

Dabei kann das Übergeben von Daten im Ring und/oder zwischen der CCPU und der Rechenstufe, sowie ein Verwalten des Programmcodes und der Daten in den Rechenstufen durch eine Management Unit (MU) erfolgen, insbesondere wobei die Rechenstufe hierzu eine Paged Memory Management Unit (PMMU) als in der Abfolge der Verarbeitung unterstützender zugehöriger Teil der MU und einen kleineren lokalen Cache-Speicher zur Verwaltung von Daten und Programmcode aufweist.

Das Ausführen des Programmcodes in den Rechenstufen kann dabei mit einem Suchen von ausführbaren Programmbefehlen und zugehörigen Daten im lokalen Cache Speicher und einem Bereitstellen dieser auf einem Programm- und Daten-Stack zur Abarbeitung durch ein Rechenwerk der Rechenstufe erfolgen, welches unabhängig von den Berechnungen des Rechenwerks durch eine Execution Engine (EE) erfolgt.

Das erfindungsgemäße Verfahren und die erfindungsgemäße Vorrichtung werden nachfolgend anhand von, in den Zeichnungen schematisch dargestellten, konkreten Ausführungsbeispielen rein beispielhaft näher beschrieben, wobei auch auf weitere Vorteile der Erfindung eingegangen wird. Im Einzelnen zeigen:

Fig. 1    eine erste schematische Darstellung einer beispielhaften Ausführungsform einer Erfindungsgemäßen Prozessorarchitektur;

Fig. 2    eine zweite, detailliertere Darstellung einer beispielhaften Ausführungsform einer Erfindungsgemäßen Prozessorarchitektur;

Fig. 3    eine schematische Darstellung eines beispielhaften Aufbaus einer Ausführungsform einer der Rechenstufen in der Ringstruktur entsprechend der Erfindung;

Fig. 4    einer beispielhaften Ausführungsform einer Management Unit in der vorliegenden Erfindung;

Fig. 5    eine Ausführungsform der vorliegenden Erfindung in Form eines Blockdiagramms.

Die Darstellungen in den Figuren dienen lediglich zur Illustration und sind, sofern nicht explizit angegeben, nicht als exakt maßstäblich zu betrachten. Gleiche oder funktionell ähnliche Merkmale sind, insoweit praktikabel, durchgängig mit denselben Bezugszeichen versehen und werden gegebenenfalls mit einem Buchstaben als Index unterschieden. Die dargestellten Schemata zeigen jeweils die technische Grundstruktur, welche von einem Fachmann entsprechend allgemeinen Grundsätzen ergänzt oder modifiziert werden können. Die Begriffe im Wesentlichen, substantiell, oder zumindest annähernd bringen dabei zum Ausdruck, dass ein Merkmal zwar vorzugsweise, aber nicht zwingend zu 100% exakt oder exakt wie wörtlich beschrieben ausgebildet sein muss, sondern das auch geringfügige Abweichungen zulässig sind - nicht nur in Bezug auf unvermeidliche praktische Ungenauigkeiten und Toleranzen, sondern speziell z.B. auch soweit dabei die für die Erfindung wesentliche technische Wirkung weitestgehend erhalten bleibt.

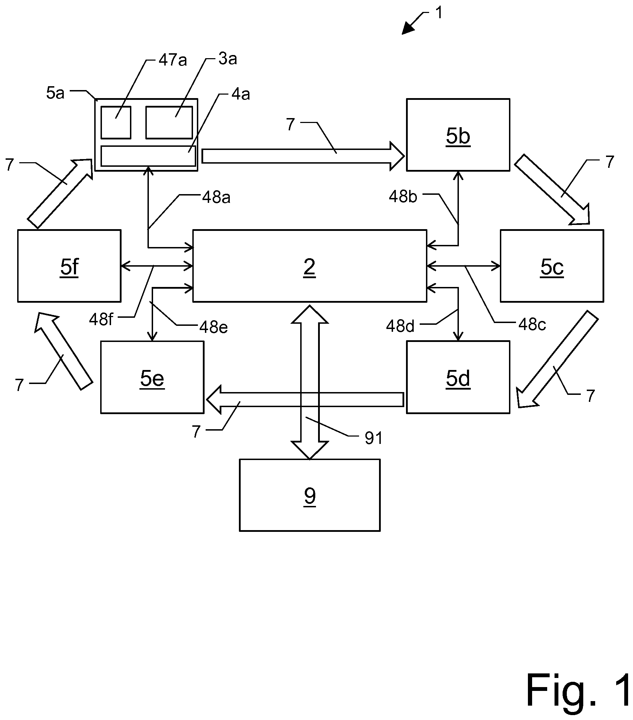

**Fig. 1** zeigt schematisch ein mögliches Beispiel einer Ausführungsform einer erfindungsgemäßen Prozessorarchitektur 1. Diese Prozessorarchitektur 1 ist dabei speziell als ein Prozessor, insbesondere als ein einziges IC- (Integrated Circuit) - Bauteil oder als ein einziger Chip, vorzugsweise auf einem gemeinsamen Halbleitersubstrat ausgebildet. In seiner Grundstruktur weist die Prozessorarchitektur 1 dabei einen Prozessorkern 2 mit einer Steuer- oder Control-CPU (CCPU) 2 auf, sowie einen Ring von mehreren Rechenstufen 5 mit Recheneinheiten 3.

Die hier gezeigte Anzahl der jeweiligen Komponenten ist dabei ein mögliches Beispiel, aber nicht zwingend als limitierend anzusehen. Speziell können die im Ring angeordneten Recheneinstufen 5a,5b,5c,5d,5e,5f auch in größerer Anzahl vorhanden sein, insbesondere mit einer Anzahl von 2 bis n Rechenstufen 5, welche über Datenleitungen 40/45 zu einem geschlossenen Ring 7 verbunden sind. Dabei erfolgt ein Transfer von Daten im Ring 7 jeweils unabhängig von den anderen Rechenstufen direkt von einer Rechenstufe 5 zur nächsten, wobei eine Management Unit 4a (MU) der Rechenstufe 5a den Datentransfer unabhängig von der Tätigkeit der Recheneinheit 3a durchführt. Vorzugsweise wird bei der Ausführung eines solchen Datentransfers im Ring also weder die CCPU 2 noch die Recheneinheit 3 belastet. Erfindungsgemäß ist der Ring 7 dabei je nach Ausführung, jedoch für Daten immer unidirektional und für Befehle direktional innerhalb eines Rings - im gezeigten Beispiel etwa im Uhrzeigersinn - ausgebildet, beispielsweise in Form einer Daisy-Chain aus individuellen und vorzugsweise autarken Verbindungen zwischen den Rechenstufen 5. Die CCPU 2 nutzt dabei nicht den Ring 7 zur Kommunikation mit den Rechenstufen 5, sondern ist getrennt vom Ring jeweils direkt mit den Rechenstufen 5 verbunden, wie dieses mit den Verbindungen 48a,48b,48c,48d,48e,48f illustriert ist. Vorzugsweise erfolgt diese direkte, sternförmige Verbindung der CCPU zu den Rechenstufen ebenfalls über die MU 4. Dabei ist lediglich die CCPU 2 mit einer Schnittstelle 91 zu einem externen RAM-Arbeitsspeicher 9 und/oder zu externen Bussystemen für die Prozessorarchitektur 1 ausgebildet. Die Rechenstufen 5 weisen nur verhältnislässig kleine, interne Cache Speicher 47 auf, vorzugsweise aufgeteilt in separate Programm- und Daten Caches oder Stacks.

Die Struktur einer Ausführungsform einer erfindungsgemäßen Prozessorarchitektur 1 weist dabei speziell

-    einen Mikrocontroller als Steuer-CPU 2 (CCPU),
-    mehrere Sätze unabhängiger Rechenstufen 5 mit hochparallelen ALU, FPU, Vektorrechner, Feldrechner mindestens einmal in voller oder verkürzter Ausführung, sowie
-    mehrfach ausgeführte Multiplexer 4 als Bindeglied zwischen den Rechenstufen 5 untereinander in einem geschlossenen Ring, um die verteilten Abläufe eines Threads der nächsten Rechenstufe 5 korrekt zuzuführen, sowie auch als sternförmige, direkte Anbindung von jeder der Rechenstufen 5 zur Steuer-CPU 2

auf. Diese sind vorzugsweise auf einem gemeinsamen Chip oder Halbleiter-Die, bzw. zumindest in einem gemeinsamen Elektronik-Bauteil, speziell etwa als ein einzelner Prozessor, ausgebildet (mit Ausnahme des hier gezeigten RAM 9). Dies insbesondere in Abgrenzung zu Systemen, welche derartige Komponenten als jeweils eigenständige Systeme aufweisen, welche über mehrere Schränke oder gar Standorte verteilt und vernetzt sind, oder gegenüber Systemen welche derartige Komponenten in Form von einer Vielzahl von jeweils dezidierten Chips auf einer gemeinsamen Leiterplatte aufweisen. In einer speziellen Ausführungsform kann dabei auch die physikalische Anordnung oder Topologie der obengenannten Komponenten auf der Chipfläche derart ausgestaltet sein, dass die CCPU 2 in einem mittleren Chipbereich angeordnet ist, und die Recheneinheiten 3 um die CCPU 2 herum am Rand der Chipfläche. Speziell kann dabei neben der logischen Anordnung zumindest teilweise auch eine physikalische Anordnung der Komponenten ausgebildet sein, welche z.B. ähnlich jener der Abbildung in Fig. 1 ist.

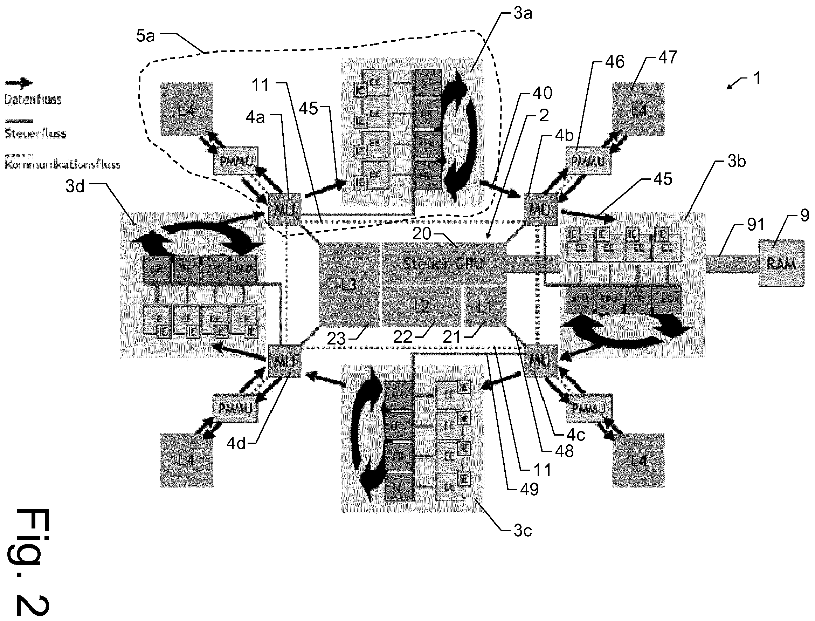

**Fig. 2** zeigt ein detaillierteres Beispiel einer Ausführungsform einer erfindungsgemäßen Prozessorarchitektur 1, bei welcher mehrere Rechenstufen 5 über direkte Datenleitungen 40/45 zwischen den jeweiligen Rechenstufen 5 zu einem geschlossenen Ring 7 verbunden sind. Zur Verwaltung dieses Rings 7 von Rechenstufen 5 und zur Bereitstellung von Daten und Programmcode für die Rechenstufen, ist eine Zentrale Steuer-CPU 2 (CCPU) ausgebildet.

In anderen Ausführungsformen, speziell bei größeren Ringen mit deutlich mehr Rechenstufen 5, kann allenfalls auch der Rechenkern 2 mehrkernig ausgebildet sein, also mehrere, parallel arbeitende CCPU-Prozessorkerne 20 aufweisen, welche das hier beschriebene Gesamtprinzip erhalten und sich die Arbeit des Rechenkerns 2 teilen, um die Leistung weiter zu steigern und alle Rechenstufen 5 zeitgerecht bedienen zu können, z.B. indem die Wartezeiten von mehreren Systemaufrufen weiter reduziert werden.

Als Basis, insbesondere bezüglich der untergeordneten Low-Level-Implementierungseinheiten in der vorliegenden Erfindung kann teils auf bekannte Grunddesigns zurückgegriffen werden. Beispielsweise kann eine ALU (Arithmetisch-logische Einheit) oder andere Sub-Komponenten im Rahmen der vorliegenden Erfindung auf Basis bekannter IP-Cores als vorgefertigte und/oder allenfalls für deren spezifischen Einsatz angepasste Funktionsblöcke im Rahmen des Chipdesigns ausgebildet werden. Einige dieser Grund-Designs aufweichen die vorliegende Erfindung aufbauen kann, sind in nicht abschließender Weise im Folgenden nochmals kurz umrissen, speziell auch in Relation zur vorliegenden Erfindung.

Bekannte CPUs mit RISC (Reduced Instruction Set Computer) Architektur basieren beispielsweise darauf, dass jeder einzelne Befehl geladen, interpretiert, ausgeführt und das Ergebnis lokal in einen Cache neben einem Registereintrag gespeichert wird. Ein klassischer Von-Neumann-Rechner mit RISC Architektur hat z.B. einen knapp gehaltenen Befehlssatz mit simpler Dekodierungsphase, wobei der Programmablauf durch "out of order execution", Pipelining, Vorhersagen, Caches und Bypass zusätzlich optimiert werden kann. Andererseits benötigen damit komplexe Operationen viele Befehle und/oder Takte. Da ein solcher RISC-Rechner-Kern zu einem Zeitpunkt nur eine Aufgabe gleichzeitig bearbeiten kann, kann es bei großen Programmen zu einem sogenannten "Stall" kommen. Insbesondere bei falschen Entscheidungen in den Vorhersagen, bei Threadwechseln und da Ergebnisse nur der Reihe nach in den Speicher abgelegt werden können, müssen Programmteile gelegentlich aufeinander warten. Dabei werden oft Mutexes oder Semaphoren genutzt, wobei viel Rechenleistung und Verarbeitungszeit der Rechenkerne an die Speicherung, Organisation und Verwaltung von Daten, sowie an Aufrufen eines Betriebssystems verloren gehen. Da ein bestimmter Befehl nur einen bestimmten Teil eines Rechenwerkes anspricht, gibt es zudem auch während der Programmausführung quasi immer eine Vielzahl von momentan ungenutzten Transistoren in den Rechenwerken. Speziell für eine effiziente Verarbeitung von vielen kleinen, verschränkten Rechenabläufe ist eine RISC Architektur oft zu linear und zu wenig verteilt.

Komplexere Aufgaben, welche bei der RISC Architektur in mehreren Schritten ausgeführt werden müssten, werden in einer alternativen CISC (Complex Instruction Set Computer) Architektur als ein einziger Befehl bereitgestellt. Ein Beispiel einer CISC Architektur kann mit gesammelten Befehlen, eine komplexe Reihenfolge an auszuführenden Operationen zwar schnell beschreiben, die komplexen Befehle bringen jedoch auch einen höheren Dekodierungsaufwand des Programmcodes mit sich. Dieser, sowie viele teils redundant entworfene Befehle beschränken dabei die Effizienz. Vielfach werden auch Coprozessoren für spezielle Aufgaben (z.B. für eine out of order execution) sowie eine Verteilung von Aufgaben auf eine oder mehrere FPU (Floating Point Unit), ALU (arithmetic logic unit) oder anderen spezifischen Logikeinheiten für Befehlssatzerweiterungen wie SSE (Streaming SIMD Extensions), AVX (Advanced Vector Extensions), etc. in den Prozessoren angewandt. Weitverbreitet sind dabei beispielsweise auch spezielle GPU (Graphics Processing Unit) Architekturen, bei welchen mehrere hochparallele Prozessoren auf demselben Hauptspeicher, mit der gleichen Gesamtaufgabe je einen unterschiedlichen Block Daten verarbeiten. Diese GPUs sind beispielsweise im Rahmen der CUDA- (Compute Unified Device Architecture), Vulkan- oder OpenCL-Technologie auch für allgemeine Programmteile nutzbar. Bei einer GPU sind die Mikrobestandteile der Einzelkerne aber untereinander nicht verknüpft und können sich nicht gegenseitig optimieren.

Zur Steigerung der Verarbeitungsgeschwindigkeit werden auch Technoligen wie Daten Puffer, Pipelining, DNA Mikroprogramme, Multicore Prozessoren, Paging, Prediction, multilevel Caching, Nachrichtensysteme für Multiprozessoren, Echtzeitprozessoren, Prozesse, Threads, Hyperthreading genutzt. Viele von diesen oder ähnlichen bekannten Ansätzen sind dabei grundsätzlich auch im Rahmen der vorliegenden Erfindung an jeweils geeigneter Stelle durchaus einsetzbar, jedoch schlägt die vorliegen Erfindung eine neue, grundlegende Prozessorarchitektur vor. Beispielsweise kann in der vorliegenden Erfindung etwa eine ALU, FPU oder gar die CCPU nach - oder ähnlich zu - bekannten Strukturen ausgebildet sein. Beispielsweise kann eine CCPU 2 oder eine Recheneinheit 3 in ihrem Grundkonzept zumindest teilweise als eine Implementierung oder eine erfindungsgemäß angepasste Implementierung einer RISC- oder CISC-Architektur ausgebildet sein.

In anderen Worten können in einer Ausführungsform einer erfindungsgemäßen Prozessorarchitektur 1 die load/store-Operationen großteils innerhalb des Rings 7 zwischen den Rechenstufen 5 mit Hilfe der MUs 4, sowie von einer dezidiert dafür ausgelegten CCPU 2 (vorzugsweise weitestgehend autonom) durchgeführt werden, während zur selben Zeit alle Rechenstufen 5 den Programmcode und die Daten weitestgehend unabhängig davon, und in hohem Masse parallel zueinander, abarbeiten.

Speziell im Vergleich zu vorbekannten Ansätzen können mit der vorliegenden Erfindung beispielsweise Verbesserungen in einer oder in mehreren der der folgenden Problemstellungen erzielt werden. Eine Verzweigung im Programmablauf erzeugt erfindungsgemäß z.B. einen neuen Sub-Thread (hier neben dieser Bezeichnung auch Baumthread oder innerer Ablauf genannt) mit einer Startposition und festen Variablen zu diesem Zeitpunkt zu einem weiterhin festen, jedoch verzweigten Code. Ein derartiger, surjektive Ablauf muss vom Prozessor bedient werden, wobei jedoch die Anzahl der Prozessor-Kerne begrenzt ist, und ein Threadwechsel möglichst zu vermeiden ist, da ein solcher viele CPU-Zyklen und somit wertvolle Zeit kosten würde.

Entsprechend der Erfindung kann dabei eine neue Abstraktionsebene entstehen. Beispielsweise war es bisher selbst in einem Feldrechner kaum möglich, feingranulare komplexe Aufgaben mit vielen jeweils durchzurechnenden Eingabevarianten uneingeschränkt variabel zu berechnen, ohne dabei an die Strukturgrenzen der Feldrechnerarchitekturzu geraten. Mit einer erfindungsgemäßen Prozessorarchitektur können insbesondere derartige Aufgaben vorteilhaft gelöst werden. Hierbei können erfindungsgemäße Ausführungsformen beispielsweise wie im Folgenden beschrieben Ausgebildet sein.

In einer erfindungsgemäßen Ausführungsform können alle Caches mit ihren Laufzeitvariablen lokal unabhängig bei den Rechenstufen 5 zwischengespeichert werden, und die Ergebnisse während des laufenden Betriebes dort gehalten werden. Ein initiales Verteilen und Laden von Daten und Programmcode aus dem RAM 9 in die Rechenstufen kann dabei unter Kontrolle der CCPU 2 über die MUs 4 der Rechenstufen 5 erfolgen, insbesondere noch während die Recheneinheiten 3 der Rechenstufen 5 mit der Bearbeitung anderer Aufgaben beschäftigt sind. Bei der Abarbeitung des Programmcodes werden die Daten dann entlang des Rings von einer Rechenstufe 5 zu nächsten verschoben, wobei jede der Rechenstufen 5, auf dieser Rechenstufe 5 autonom ausführbare Teile des Programmcodes, welche auf die in der Rechenstufe derzeit verfügbaren Daten anwendbar sind, bearbeitet.

Dabei kann ein lokal verteilter, multipler Stack für weiterzureichende Variablen je zwischen den Recheneinheiten 5 und eine Registrierungseinheit mit einem steuernden Mikrocontroller ausgebildet sein. Die Registrierungseinheit ist dabei derart ausgebildet, für Entscheidungspunkte Breakpoints zu setzen und zu einem Thread der jeweils anderen Entscheidung über das gesamte System rückwärts - beispielsweise über "Labels" - zurückzufinden, während die andere Entscheidung hochparallel abgearbeitet wird, ohne die Ergebnisse bis dahin zwangsläufig zu verwerfen. In anderen Worten wird damit ein Ergebnisbaumspeicher ausgebildet.

Der zentrale CCPU-Mikrocontroller 2 übernimmt dabei primär nur noch Interrupts als Funktion für den gesamten Prozessor 1. Als zentrale CCPU 2 kann dabei ein einfach aufgebauter, jedoch sehr schneller CPU-Kern die Organisation der Threads, Starts und Speicherung, sowie Verzweigung der Abläufe bereitstellen, sowie Verklemmungen und Konflikte erkennen und lösen. Entsprechen kann die CCPU 2 speziell (und vorzugsweise nur) für diese Aufgaben ausgebildet sein, also beispielsweise einen entsprechend auf obengenannten organisatorische Abläufe hin ausgebildeten Befehlssatz aufweisen, insbesondere z.B. auf Strukturen verzichten, welche für derartige Aufgaben nicht benötigt werden und/oder spezielle Strukturen zur performanten Abwicklung diese Ausgaben aufweisen.

In einer weiterführenden erfindungsgemäßen Ausführungsform können dann beispielsweise infolge auch mehrere Multiple Instruktion Single Data (MISD) Hauptprozesse darüber gehend parallelisiert werden, und damit kann erfindungsgemäß ein Multiple Instruktion Multiple Data - Multiple Instruktion Single Data (MIMD-MISD) System (nach der Flynnschen Klassifikation) ausgebildet werden.

Erfindungsgemäß können dabei nicht nur zwei Entscheidungen fortlaufend zu berechnet werden, sondern nahezu beliebig viele Entscheidungen zeitabhängig oder zeitunabhängig fortlaufend bearbeitet werden. Die zeitabhängige Berechnung ist dabei zwar nach wie vor an die (in weiten Bereichen beliebig skalierbare) Anzahl paralleler logischer Einheiten (ALU) gebunden, das erfindungsgemäße Gesamtsystem ist aber für viele Aufgaben performanter als klassische Architekturen. Sind nicht hinreichend viele parallele logische Einheiten verfügbar, so kann nacheinander eine zeitunabhängige Bearbeitung auf derselben logischen Einheit erfolgen, wobei aber erfindungsgemäß kein aufwändiger Threadwechsel erfolgen muss, sondern von der CCPU 2 lediglich entsprechende Speicherseiten in den lokalen Caches bereitgestellt werden, was z.B. auch während der vorangehenden Bearbeitung erfolgen kann, bis die angesammelte Menge gepufferter Daten am Eingang vollständig mit den richtigen Befehlen verknüpft und abgearbeitet wurde.

In einer Ausführungsform der Erfindung kann dabei eine Verwaltung für virtuelle und lokal ständig neu zuzuordnende Speicherseiten ausgebildet sein, welche automatisch Thread-Verzweigungen zuordnet und effizient Ergebnisse eineindeutig mit einer eineindeutigen Codezeile und Speicherstelle (oder mehrere Codezeilen und Speicherstellen in einem automatisieren Feld) abspeichert, sowie benötigte Codeseiten für verschiedene Codeabschnitte lädt und/oder nach Ablaufbedarf auf die Recheneinheiten 5 aufteilt. Dabei ist die Verwaltung derart ausgebildet, dass die Caches Codeseiten einer Verarbeitungslinie zuordnen, und nicht mehr einem spezifischen physikalischen Prozessorkern wie dies sonst üblich ist.

Erfindungsgemäß werden im Programmablauf auf einer erfindungsgemäßen Prozessorarchitektur Ergebnisse einer ersten Rechenstufe 5a in einer Art von "Round Robin" Verfahren in einheitlicher Reihenfolge immer oben auf einen Stack Eingang der im Ring folgenden, nächsten Rechenstufe 5b gelegt.

Dabei kann in einer Ausführungsform der erfindungsgemäßen Prozessorarchitektur 1 auch von einem einheitlichen Takt über die gesamte Prozessorarchitektur 1 hinweg abgesehen werden. Jede der Rechenstufen 5 kann ihren Eingangs-Stack mit Daten so schnell abarbeiten, wie diese dazu in der Lage ist, also beispielsweise allenfalls auch mit einem jeweils individuellen Takt. Neben den zu verarbeitenden Daten werden die Befehle zur Verarbeitung der Ergebnisse und Daten parallel dazu auf einen Befehls Stack für jede der Rechenstufe 5 gelegt. Wo erforderlich, können in der erfindungsgemäßen Prozessorarchitektur dabei auch entsprechende Übergangsstrukturen implementiert sein, welche ausgebildet sind, um zwischen Komponenten der Prozessorarchitektur taktunabhängig über Puffer und Signale zu arbeiten.

Speziell kann die erfindungsgemäße Prozessorarchitektur 1 dabei derart ausgebildet sein, dass mehrere verteilte Abläufe eines Threads über einfache Rechenstufen 5 verteilt und in einer Reihenfolge nach einem dynamischen Prioritätsmuster abgearbeitet werden, welches "Out of Order execution" anbietet, insbesondere um Echtzeitprozesse und physikalische Vorgänge zu modellieren, speziell nach einem "Aktion - Reaktion" Prinzip.

Zusammenfassend stellt eine Ausführungsform einer erfindungsgemäßen Rechnerarchitektur 1 dabei eine eineindeutige Rechnerarchitektur bereit, welche je Prozessor 1 an einem Hauptdatenstrom arbeitet, dabei jedoch einen Datenfluss mehrfach, vorzugsweise adaptiv zur Modellierung des Problems echtzeit-, parallel durch verschiedene Befehle bearbeiten kann. Die Rechnerarchitektur 1 ist dabei vorzugsweise nicht taktabhängig und stellt eine Kombination von Eigenschaften von Feld- und Vektorrechnern bereit. Speziell stellt die erfindungsgemäße Rechnerarchitektur 1 einen neuen Ansatz bereit, wie Ergebnisse zwischengespeichert werden und dabei zugleich eine Übersicht für das System eineindeutig beibehalten wird.

In anderen Worten kann eine erfindungsgemäße Ausführungsform auch beschrieben werden, als eine Verknüpfung von einer beliebigen oder binär darstellbaren Anzahl an beliebig adressierbaren Rechenstufen 5, vergleichbar mit einer Art von Wabenfeld. Dabei sind die erste und die letzte Spalte der Rechenstufen 5 wiederum über den Ausgang des Letzten mit dem Eingang des ersten verknüpft, und ergeben somit einen Ring 7. Der Ring 7 bildet sich also um den Steuerprozessor CCPU 2 in dessen Mitte, wobei sich Ring 7 und Mitte primär auf deren Verbindungstechnische Anordnung beziehen und in anderen Ausführungsformen auch andere geometrische Anordnungen ausführbar sind, insbesondere derartige, bei welchen (z.B. im Rahmen einer Chipflächen- oder Timing-Optimierung) eine andere physikalische Anordnung ausgebildet wird, welche aber dennoch eine erfindungsgemäße logische Anordnung der Komponenten implementiert. In einer bevorzugten Ausführungsform wird die erfindungsgemäße Prozessorarchitektur 1 aber auch physikalisch auf einem Halbleiter-Die in Ihrer Grundstruktur ähnlich wie in Fig. 1 dargestellt angeordnet. Erfindungsgemäß ergeben dabei die Rechenstufen 5 stets einen geschlossenen Ring in ihrem Datenfluss und die Steuer CPU CCPU 2 weist zu jeder der Rechenstufe 5 eine sternförmige Verbindung zu deren Kontrolle und Verwaltung auf, über welche sternförmige Verbindung auch ein initiales Laden von Programm- und Code-Teilen zur Ausführung von einem externen Speicher 9 auf den Recheneinheiten 5, sowie ein zurückholen von Ergebnissen oder Teilergebnissen der Programmausführung von den Recheneinheiten 5 zum Speicher 9 erfolgt, was von der CCPU 2 gesteuert, vorzugsweise weitestgehend unabhängig von einer aktuellen Abarbeitung eines aktuellen Programmcodes in den Recheneinheiten 5 und oder vom Fluss der Daten entlang des Rings erfolgt.

Speziell ist dabei als, vorzugsweise intelligentes - also mit einem eigenen Befehlssatz programmierbares oder konfigurierbares - Bindeglied zwischen jeder der Rechenstufen 5 eine Management Unit 4 (MU) ausgebildet, beispielsweise in Form einer konfigurierbaren oder programmierbaren Logikeinheit oder als FPGA. Es ist also jeder Rechenstufe 5 eine MU 4 zugeordnet, vorzugsweise an deren Eingang für Daten im Ring angeordnet. Beispielsweise stellt die MU 4b der Rechenstufe 5b ein Bindeglied zwischen

- der im Ring vorangehenden Rechenstufe 5a (also speziell deren MU 4a),
- der im Ring nachfolgenden Rechenstufe 5c (also speziell deren MU 4c),
- der CCPU 2, sowie
- des lokalen Cache 47 der Rechenstufe 5b dar.

Dabei ist die MU 4 derart ausgebildet, dass

- entlang des Rings primär die zu verarbeitenden Daten zwischen den Recheneinheiten 5 zu deren sukzessiven Verarbeitung zwischen den Recheneinheiten 5 entlang des Rings transferiert werden,
- zwischen CCPU 2 und dem lokalen Cache 47 von der jeweiligen Recheneinheit 5 auszuführender Programmcode in einen Programm-Puffer der Rechenstufe 5 geladen wird,
- zwischen CCPU 2 und dem lokalen Cache 47 von der jeweiligen Recheneinheit 5 initiale Daten in einen Daten-Puffer der Rechenstufe 5 geladen wird bzw. Ergebnisdaten zur CCPU 2 zurückgelesen werden,
- Daten und Programmcode zwischen der Recheneinheit 3 der Rechenstufe 5 und deren lokalem Cache 47 transferiert werden.
- Steuer- und Konfigurationsdaten von der CCPU 2 zur MU 4, dem PMMU 46 und/oder der Recheneinheit 3 übermittelt bzw. Status- und Fehlerdaten von diesen Komponenten zur CCPU 2 übermittelt werden.

Das Verschieben und/oder Laden der Daten erfolgt dabei vorzugsweise in Form von Blöcken, welche auch als Speicherseiten oder Pages bezeichnet werden. Die MU selbst arbeitet für die Verarbeitung von Daten dabei nur in eine Richtung im Ring. Für eine Zusammenführung zweier Thread Teile kann mit einer Bypass-Funktion die MU jedoch zu einer beliebigen anderen MU Daten und somit am Eingang abgelegte Zwischenergebnisse, welche genau für diese Zusammenführung an dieser Rechenstufe benötigt werden, übertragen - dieses jedoch nur ohne weitere Verarbeitung der Daten. In einer Ausführungsform läuft eine derartige Übertragung speziell für nachfolgende Rechenstufen n+1 bis n+m, wobei r die Anzahl der Rechenstufen ist, m<=r/4 und eine Datenverbindung einmal durch die Mitte des Rings von n bis n+r/2 verläuft. In einer Ausführung kann eine derartige Aufgabe der Bypass-Datenweiterleitung auch von der CCPU übernommen werden, speziell da diese derartige Vorgänge ohnehin koordiniert, genehmigt und verwaltet.

Die Anzahl Rechenstufen 5 im Umlauf ist hier beispielhaft mit den vier Rechenstufen 5a,5b,... gezeigt, diese Anzahl ist aber beliebig erweiterbar.

Es können mehrere Instanzen von erfindungsgemäßen Prozessorarchitekturen 1 als Multiple Instruction Single Data (MISD) zu einem Multi-MISD zusammengeschlossen werden, optional auch auf einem einzigen Chip, wobei Datenströme global verwaltet oder gespiegelt werden. Beispielsweise kann die Programmausführung dabei derart ausgebildet werden, dass jede Prozessorarchitektur 1 nur einen Prozess verarbeitet. Weiterhin sind Zeitscheibenmodelle anwendbar, wobei jedoch die gesamte Prozessorarchitektur 1 und auch die MU die derzeit gehaltenen Seiten umschalten müsste. Ein Chip mit mehreren erfindungsgemäßen Prozessorarchitekturen 1 kann in einen Multiprozess bzw. Multithread Modus übergehen, indem aktiv zu bedienende Prozesse auf dem Befehls-Stack in Adressräume unterteilt werden und diese von den Adressräumen auf dem RAM Teilmengen bilden, solange die MU dies unterstützt, wodurch z.B. auch ein gewöhnlicher Multicore Prozessor emuliert werden kann. Es handelt sich hierbei nicht um verteilte Threads mit Entscheidungsbaum, auf die spezieller Bezug genommen wurde, sondern um echte wahlweise derzeit schon bekannte lineare oder verzweigte Prozesse, die analog auf der Struktur laufen. Die Abläufe sind aufgrund der Zuordnungstechnik weiterhin für die von Prozessen untergeordneten Threads, auch von mehreren Prozessen, möglich.

Eine erfindungsgemäße Ausführungsform eines Ablaufs kann dabei beispielsweise folgende Aspekte aufweisen:

1. Eine Ausführungsform eines erfindungsgemäßen MISD-Rechners kann dabei ein koordiniertes und komplexes Pipelining über eine erweiterte Hierarchie eines Steuer-Prozessors 2 bereitstellen. Der Datendurchsatz kann damit massiv erhöht werden, da der Programmablauf nicht ständig, sondern nur bei Bedarf durch einen Systemaufruf unterbrochen wird.

2. Die berechneten Ergebnisse werden koordiniert, jedoch erst zurückgeschrieben, wenn sie benötigt werden. Es herrscht kein Rückschreibezwang, sondern nur eine kleine Anzahl an Registern kann über eine Zustandsänderung sofort benachrichtigen. Die Ergebnisse können solange im Umlauf bleiben, bis der Datenstrom nicht mehr durch Befehle manipuliert werden muss und terminiert. Dabei dient ein allfälliges, zeitweiliges Zurückschreiben nur der Sicherheit, ist jedoch nicht zwingend notwendig. Die CCPU 2 verwertet die Zwischenergebnisse nicht, lediglich z.B. im Falle eines Absturzes oder dergleichen können diese z.B. einer Wiederherstellung des Systems dienen. Nur der korrekte Ablauf und Zusammenhang der Befehle und das Laden und Speichern sowie IO sind Aufgabengebiete der CCPU 2. Durch diese Auslagerung kann die CCPU 2 und Ihre internen Logikschaltungen vergleichsweise klein ausgebildet werden. Dabei kann an dieser Stelle bei der Ausbildung der CCPU nicht primär Geschwindigkeit, sondern Konsistenz im Fokus stehen.

3. Erfindungsgemäß können Fehlercodes lediglich weitere meldepflichtige festgelegte Verzweigung bilden, welche einfach in den regulären Ablauf integriert werden können.

4. Eine Ausführungsform einer erfindungsgemäßen Prozessorarchitektur 1 kann dabei einen hochvariablen Feldrechner im weiteren Sinne ausbilden, mit der Möglichkeit Threads auf demselben Prozessor 1 in Sub-Threads zu trennen und zu koordinieren, sowie wieder zusammenzuführen. Es sind nicht mehr vollwertige Prozessorkerne für einen weiteren Thread erforderlich. Damit kann Platz und wertvolle Chipfläche eingespart werden.

5. In einer Ausführungsform einer erfindungsgemäßen Prozessorarchitektur 1 kann ein kompletter Feldrechner simuliert werden und dabei eine variable Handhabung mit ähnlicher Leistung erzielt werden, erfindungsgemäß können z.B. Probleme der Berechnung für die Quantenphysik und für die Erforschung von Quantencomputern effizienter gelöst werden.

6. Erfindungsgemäß können auch "Out of Order Executions" entfallen, da nur gerade geladene und gültige Befehle verarbeitet werden, wobei das Verfahren zur Verteilung des Programmcodes und der Daten in der Prozessorarchitektur 1 auf dieser Sucheigenschaft geladenen und gültigen Befehlen basiert. Da von einem hohen Durchsatz ausgegangen wird, steht die Aufgabe der weitestgehenden Optimierung weiterhin dem Compiler zu. Solange noch ausführbare Daten und Befehle geladen sind, entsteht zwar eine Verzögerung, jedoch keine Einbuße an Durchsatz des Prozessors.

7. In einer Ausführungsform, in welcher für jede Recheneinheit eine auffüllbare FIFO Queue gesetzt wird und innerhalb dieser Befehle Betriebsmittel organisiert werden, kann optional auch ein Bypassing und Forwarding je Rechenstufe 5 implementiert werden. Im Vergleich zu Hyperthreading sind dabei bei vergleichbarer Wirksamkeit weniger extra Module auf dem Chip erforderlich. Weiterhin beläuft sich die Instruction Fetch-Phase auf einen Verarbeitungsprozess der CCPU und entfällt in den Rechenstufen 5. Es gibt effektiv nur noch 3 oder 4 grob zu unterscheidende Phasen für die Pipeline und alle sind in den Einzel-Komponenten verteilt und hochparallel ausführbar. Durch diese Verteilung lassen sich effektive, weiter untergliederte Pipelines erschaffen, was die Gesamtleistung dieser vereinfachten Komponenten für die übrigen 3 oder 4 Einzelphasen der Steuerung steigert und/oder die Gestaltung vereinfacht. Eine erfindungsgemäße Vielzahl von kleineren und einfacheren Steuerwerke mit ihren Rechenwerken sind einfacher zu konzipieren und zu optimieren, als ein großes, komplexes Steuerwerk, insbesondere wenn die kleineren Steuerwerke in gleicher Form mehrfach einsetzbar sind.

8. Erfindungsgemäß gibt es - im Gegensatz zu Feldrechnern - keine Leistungseinbrüche durch nicht ganz voll gewordene Berechnungsblöcke. Erfindungsgemäß erfolgt ein kontinuierliches Auffüllen durch die CCPU 2, insbesondere abhängig vom Füllstand des Befehl-Caches der Rechenstufen 5.

9. Die gesamte Prozessorarchitektur 1 kann dabei mit einem äußeren Interface wie ein herkömmlicher Prozessoren ausgebildet sein. Dabei tritt vielfach die Bewertung der Geschwindigkeit der Einzelkerne in den Hintergrund, sondern es wird mehr ein Durchsatz der Rechenstufen 5 bewertet. Weiterhin ist die Anzahl parallellaufender Threads effektiv direkt durch die Anzahl der einzelnen Rechenwerke (ALU, FPU, logische Einheiten, Feldrechner und Vektorrechner) begrenzt, was die Parallelitätsfähigkeit einer erfindungsgemäßen Architektur 1 sogar verhundertfachen kann. Beispielsweise bei 4 Rechenstufen 5 mit je 8 Rechenwerken jeder Art sind im besten Fall bis zu 32 Threads gleichzeitig aktiv, wobei sich eine derartige Prozessorarchitektur durchaus auf einer Chipfläche realisieren lässt, welche in etwa jener eines klassischen Einkern-Prozessors entspricht.

Zusammenfassend ist die Effizienz und Auslastung einer Ausführungsform einer erfindungsgemäßen Rechnerarchitektur 1 in Ihrer Struktur verankert, dabei insbesondere im Hinblick auf Berechnungsaufgaben mit einer hohen Last und mit einer hohen Anzahl von Berechnungsvorgänge ausgebildet.

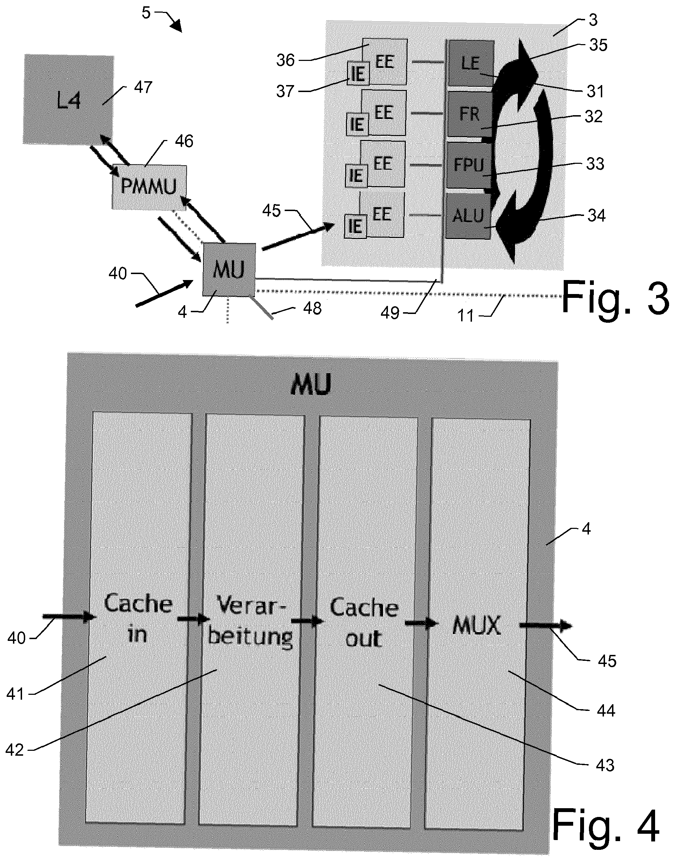

In **Fig. 3** ist ein Beispiel einer Ausführungsform einer erfindungsgemäßen Rechenstufe 5 mit einer Recheneinheit 3 sowie eine dieser zugeordnete Management Unit 4 (MU) dargestellt.

Erfindungsgemäß erfolgt eine unabhängige Weiterleitung von Daten und Befehlen zur Anpassung der Laufzeiteigenschaften, zum Beispiel mit einer Anpassung der Programmcodeseitenverteilung beim Aus- und Wiedereintritt von Schleifen, welche unförmig über die Rechenstufen 5 und somit über die Programmnachfolge verteilt sind.

Der im Stand der Technik übliche Weg über den Cache L1,L2,L3 des Steuer-CPU Kerns 20 wird mit der erfindungsgemäßen Ringstruktur bei einer Vielzahl der ausgeführten Befehlsfolgen umgangen, sodass eine Vielzahl von Laden- und Speichern-Befehle entfallen kann und/oder individuell auf die jeweiligen Rechenstufen 5 verteilt werden.

Die erfindungsgemäße Steuer-CPU 2 ist dabei derart ausgebildet, um ständig einen Overhead für die Vorbereitung des Rechenweges durch alle Rechenstufen 5 vorzubereiten, sodass bei der eigentlichen Ausführung der Berechnungen durch die Recheneinheiten 3 nur die Ergebnisse an noch freien Stellen oder an vorbereiteten reservierten Stellen in dem, auf dem Lokalen Cache vorbereiten Arbeitsablauf der Rechenstufen 5 eingetragen, weitergeleitet und anschließend in der nächsten Rechenstufe 5 weiterverarbeitet werden - ohne dass hierfür zur Laufzeit ein weiterer Overhead erforderlich ist.

Die Dateneingänge für einen Programmbefehl, welcher von eine Rechenwerken 31,32,33,34 der Recheneinheit 3 bearbeitet wird liegen immer direkt in einem der vielen jeweils lokalen Registersätze vor und werden von einer sogenannten PMMU 46 geladen, deren zugehörige Befehle werden von einer Interpreting Engine 37 (IE) gleichzeitig geholt und decodiert, indem sie von einer Exekution Engine 36 (EE) in die Eingangsbefehlsregister der Rechenwerke gelegt und von den verschiedenen Rechenwerken verarbeitet werden, wobei die IE ihre Befehle für die geladenen Daten vom Stack 47 der Rechenstufe 5 bezieht. Die IE 37 predecodiert bei Bedarf einen komplexen Standardkombinationsbefehl. Diese IE 37 kann auch in der EE 36 integriert sein.

Eine Rechenstufe 5 verfügt weiterhin über eine Management Unit 4 (MU), welche aus dem Mikroprogrammcode einer Steuerung, beispielsweise auf ihrem aktualisierbaren FPGA Chip, die Verwaltung und Koordination über die Kommunikation mit der Steuer-CPU 2, der EE 36, der IE 37, sowie des lokalen Cache 47 der Rechenstufe 5 aufgrund des dargelegten Programmcodes des auszuführenden Programmes des Benutzers übernimmt.

Die ansonsten bei bekannten Prozessoren zur Performance Steigerung übliche Struktur an großen Caches zwischen den CPU-Kernen kann daher in einer erfindungsgemäßen Prozessorarchitektur 1 zu einem großen Teil entfallen, sodass diese (bzw. deren Platz auf dem Die) für Rechenstufen 5 genutzt werden können. Durch die Verteiltheit über die Vielzahl der Rechenstufen 5 im Ring wird das zu bearbeitende Problem des Programmcodes effektiv zerlegt und resultiert in kleinen Programmcodeteilen, welche in entsprechend kompakten Rechenstufen 5 bearbeitet werden können. Somit können diese Rechenstufen 5 jeweils mit verhältnismäßig kleinen und dafür vorzugsweise sehr schnellen Caches ausgebildet sein, was die Gesamtleistung und den Durchsatz einer erfindungsgemäßen Ausführungsform zu erhöhen vermag. Eine erfindungsgemäße Rechenstufe 5 kann dabei mehrere, jeweils dezidierte Befehls-Stacks aufweisen, insbesondere jeweils für unterschiedliche Rechenwerke, beispielsweise etwa getrennte Stacks für verschiedene Befehlsarten, speziell z.B. jeweils getrennt für eine FPU 33, ALU 34, ... der Rechenstufe 5.

Jede Rechenstufe 5 weist dabei vorzugsweise mehreren Feldrechnern (FR) 32, Vektorrechnern, logischen Einheiten (LE) 31, ALU 33 und FPU 32 Einheiten (voll- und/oder halbwertig) auf. Die Rechenstufen 5 werden dabei, insbesondere für Multiple Instruction Single Data (MSID) Berechnungen auch als (MISD-)Feldzeilen oder auch als Arme der Prozessorarchitektur bezeichnet. Deren Dateneingang ist in Fig. 1 beispielhaft auf der Seite entgegen des Uhrzeigersinnes dargestellt, deren Datenausgang im Uhrzeigersinn. Der damit aufgebaute Ring von Rechenstufen 5a wird so gestaltet, dass die Daten-Ausgänge stets über einen Multiplexer in der MU 4 an einen oder mehrere Daten-Eingänge einer nächsten Rechenstufe 5b überführt werden können. In speziellen Ausführungen entsprechend der Erfindung ist optional auch ein Bypass zur selben Rechenstufe 5 selbst und/oder in die jeweils darauffolgende Rechenstufe 5 über eine entsprechend ausgebildete MU 4 möglich.

In der hier gezeigten Ausführungsform ist die MU 4 bidirektional mit einer Paged Memory Management Unit 46 (PMMU) verbunden. Dabei kann ein, jeweils an eine solche PMMU 46 angebundener Level 4 Cache Speicher 47 (L4) Seiten oder Pages zwischenspeichern und bis zum nächsten Page-Wechsel vorhalten. Dabei verfügt - wie auch in Fig.1 ersichtlich - jede der MUs 4 über eine jeweils individuelle PMMU 46 und einen jeweils individuellen L4-Cache 47. Wie die gepunktete Linie neben den Pfeilen für den Datenfluss zwischen MU 4 und PMMU 46 andeutet, kann auch ein Kommunikationsfluss zur Steuerung und Konfiguration der PPMU 46 von und/oder über die MU 4 etabliert werden.

Jede Recheneinheit 3 hat somit einen, meist verhältnismäßig kleinen, also beispielsweise ein- oder mehrseitigen Paging-Puffer 47. Dieser Paging-Puffer kann dabei als Ausgangs- und/oder Eingangs-Puffer fungieren, insbesondere da jeder Ausgang einer Recheneinheit in der erfindungsgemäßen Ringstruktur auch Eingang der nächsten Recheneinheit ist, die korrekte Zuordnung der Seiten kann dabei virtuell erfolgen. Der Paging-Puffer ist dabei als hochparalleler Seitenpuffer ausgebildet und in der Rechnerarchitektur für direkten 1 zu 1 Datenfluss integriert, insbesondere für Daten mit der Größe eines Einfachen (oder in Kombination allenfalls auch Vielfachen) der Einheiten einer Multiple Instruction Single Data (MISD)-Rechenstufe. Die Größe des Paging-Puffers kann dabei insbesondre von der Anzahl der vorhandenen Rechenstufen abhängig gewählt werden. Beispielsweise kann jedes Passieren von N Rechenstufen N Datensätze benötigen und somit der Puffer für die Anzahl der Rechenstufen im Voraus entsprechend dieser Anzahl oder einem Vielfachen davon ausgebildet werden, sodass die CCPU für einen Thread nicht nach jeder Runde den Fortschritt überprüfen muss, sondern z.B. erst, wenn unter die Hälfte der noch verarbeitbaren Daten, oder sonstige Pagingdirektiven, für einen Thread noch im Puffer anzutreffen ist. Bei zu geringer Auslegung muss die CCPU das Auffüllen der Daten und Befehle für diesen Thread zu oft planen, was der Performance abträglich sein könnte. Mit diesem können beispielsweise gespaltene, startverwandte Datenströme vereinheitlicht werden. Zusätzlich hat jede MISD-Rechenstufe 5 einen vollassoziativen Befehls-Stack, welcher Stack von oben über und mithilfe der MU 4 von der Steuer-CPU 2 befüllt wird, und von unten automatisch von der MISD-Rechenstufe 5 bei deren Bearbeitung entnommen und verarbeitet wird.

Die Breite der Befehlsworte der CCPU 2 kann dabei unabhängig von der Breite der MISD-Rechenstufe 5 ausgebildet sein. Jede Befehlsarchitektur der LE 31, FR 32, FPU 33, ALU 34, etc. ist eigenständig und kann, z.B. je nach Benutzungswahrscheinlichkeit anhand der Befehlshäufigkeit, optional auch mehrmals redundant ausgebildet sein. Ein Suchen des richtigen Befehls bzw. dessen Speicher-Seite wird anhand der Kombination der Thread-Nummer und dem Befehlszeiger im Programm sowie allenfalls einer Auflaufpriorität oder einer Warteschlange auf dem Befehls Stack durchgeführt, wobei das Bereitstellen der Seite über eine sogenannte Programm Memory Management Unit 46 (PMMU) erfolgt. Dadurch können nur Befehle im nächsten Prozessschritt reagieren, welche Threadnummer und den Befehlszeiger +1 als Signatur tragen, sodass mehrere gespeicherte Befehle aus einem Paging-Puffer des Cache-In der MU in die Recheneinheit 3 geladen und von dieser ausgeführt werden können.

Der Compiler, mit welchem der Programmcode generiert wird, bereitet dabei den Programmcode schon derart vor, dass auf jeder Speicher-Seite für einen Befehls-Stack nur die möglichen Befehle modulo der Kombinationen des Programmablaufes des Rings eingetragen werden. Ein Befehl, welcher im Befehls-Stack als bereit markiert ist, wird durch die Execution Engine 36 (EE) in die Register des entsprechenden Rechenwerks eingesetzt. Die EE 36 wählt dabei aus dem Befehls-Stack einen möglichen, bereiten Befehl z.B. anhand der höchsten Priorität und daher derzeitig kritischer Latenz oder nach dem FIFO Prinzip aus, und verbindet damit zumindest zwei im und durch den Befehl reservierte, verlinkte gültige Daten aus dem separaten geführten Daten-Cache mit dem Befehl vom Befehls-Stack. Die Verbindung aus Befehl und zugehörige Daten wird dann in den nächsten freien Platz der Befehlsausführung in ein gewähltes Rechenwerk eingesetzt. Die EE 36 prüft fortlaufend und mit einer möglichst hohen Suchrate ein mögliches Einsetzen von Befehlen, zumindest solange Hardwarekapazitäten zur Befehlsausführung im Rechenwerk frei sind. Die Rechengeschwindigkeit ist nicht auf ein großes Prozessorkonstrukt verteilt und dadurch begrenzt und komplex, sondern umfasst nur direkt eine Rechenstufe 5 und einen entkoppelten Kommunikationsbus zwischen Management Unit 4 (MU) und Steuer-CPU 2 (CCPU), welche dadurch an Geschwindigkeit gewinnt.

Jeder Befehl verlinkt mit einer Signatur des Threads, Datenstroms und dem Assembler Programm Counter -> PC, eineindeutig seinen Nachfolgebefehl und den letzten Befehl mit einer Sprungentscheidung. Dazu wird ein neues, breites Befehlsformat bereitgestellt, welches einen Befehl und eine Variable umfasst, z.B. ein 128 Bit Befehlsformat, welches einen 64 Bit Befehl und eine Multiplikative von 8 Bit Variable (heute 64 Bit Standard) aufweist, wodurch die Erweiterung der Bandbreite des Rechners von der Befehlsbandbreite entkoppelt wird.

Während des Einsetzens eines Befehls (hier nach dem Wort "Entrance" auch ENT genannt) wird ein Marker eines eigenständigen Befehlsablaufes auf "used" gesetzt, und nach Verlassen der Rechenstufe auf "ready" zurückgesetzt. Erst wenn ein speicherbares, ausgabepflichtiges Ergebnis nach der internen Pipeline (DEC,(DEC),EX,MEM/WB) bereitgestellt werden soll, wir der Zustand der Rechenstufe 5 mit dem Marker auf "out" gesetzt. Ein weiterer Zustand der Rechenstufe 5 ist der Marker "none" also der Leerlauf, in der die Recheneinheit 3 in der Rechenstufe 5 für die Energieeinsparung abgeschaltet wird. Für den Zustand einer Recheneinheit 3 genügt im obigen Beispiel ein Marker von 2 Bit, in anderen Ausführungsformen können allenfalls auch weitere Zustände in einem breiteren Marker codiert werden.

Für reguläre Abläufe kann ein Zähler implementiert sein, welcher für jeden Befehl gespeichert wird, und anhand welchem feststellbar ist, wann dieser Befehl wohl fertig berechnet ist, also den Marker "out" erhalten wird. Dieses kann z.B. in Form einer Tabelle im Speicher ausgebildet sein, speziell als eine separate Erweiterung der Registertabelle der Befehle und Anwärter der MU gemeint. Da mehrere Befehle gleichzeitig ausgeführt werden und in den Recheneinheiten 3 selbst kleine Pipelines für binäre Rechenschritte vorgesehen sind, wird für die Planbarkeit zusätzlich auf der geladenen Arbeitsseite der MU der derzeitige Rechenzustand eines Befehls auf seinem Rechenwerk notiert. Damit kann z.B. registriert werden, wann eine benötigte Recheneinheit 3 frei wird. Die MU selbst lädt die benötigte Seite mit der PMMU aus dem L4-Cache und arbeitet und notiert auf dieser Seite den derzeitigen Rechenzustand, bis die Seite bei einem Wechsel und zusätzlich in regelmäßigen Abständen nach L4 zurückgeschrieben und aktualisiert wird.

Zum Ablauf ergibt sich die Besonderheit, dass bei komplexen Standard Combination Execution (SCE) Befehlen eine zweite Decodierungsphase initiiert wird, welche den Ursprünglichen Befehl auf der Seite des Befehls-Stacks durch einen Link auf eine Seite der Paged Memory Management Unit 46 (PMMU) mit dem durch die Interpreting Engine 37 (IE) generierten Codeseite umleitet und in der nachfolgenden zweiten Decodierung den ersten umgeleiteten Befehl ausführt, bis das Programm durch die Management Unit 4 (MU) auf den Befehls-Stack zurückspringt. Die SCE kann dabei als Teil oder Erweiterung der IE ausgebildet sein. Damit können z.B. häufige Befehlsketten virtuell nach außen als ein einziger Befehl ausgebildet sein, und dieser Befehl kann immer wieder Intern oder über die folgende Kette an Rechenstufen eingerichtet werden, ohne die CCPU zu belasten. Insbesondere für solche SCE-Befehle kann auch eine Ausnahme bezüglich der ansonsten in der erfindungsgemäßen Rechnerarchitektur nicht primär vorgesehenen Wiederausführung in derselben Rechenstufe implementiert sein, beispielsweise indem spezielle Rechenstufen für spezielle SCE ausgebildet sind oder vorkonfiguriert werden.

Der letzte bekannte Befehl eines Programmes wird zusammen mit der errechneten Ausgabe (Eintrag, Array oder Seiten) an die Steuer CPU 2 (CCPU) zur Identifizierung übermittelt. Jeder Befehl enthält zusätzlich eine zuordnungsfähige Thread ID, beispielsweise als Befehlsformate mit Rechenstufennummer, Befehlsnummer, Threadnummer, etc. welche einen korrekten nächsten Ort für die Daten des Befehls zuordnen. Beispielsweise ist ein Befehl an einer Registerstelle einer Rechenstufe gespeichert, und genau diese wird durch die CCPU für den Befehl zuerst identifiziert um einen Nachfolger zu finden und die richtigen Daten einzusetzen. So können etwa auf einer Rechenstufe zwei gleiche Programme mit zwei unterschiedlichen Datensätzen und somit verschiedenen Thread Nummern, jedoch gleichen Befehlsnummern und gleichen Rechenstufennummern vorliegen und bearbeitet werden. Die n+1 Rechenstufe muss dabei die richtigen Daten an die Befehle trotzdem zuordnen können - obwohl alles bis auf die Daten gleich ist - was mittels der Thread ID erzielt werden kann. Die Management Unit 4 (MU) verwaltet jeweils intern zumindest so viele Seiten (welche aus der Paged Memory Management Unit 46 (PMMU) geladen werden), wie Eingänge an den Recheneinheiten 3 vorhanden sind.

Eine Ausführungsform von Caches in der erfindungsgemäßen Prozessorarchitektur ist dabei auch in Fig. 2 und Fig. 3 beispielhaft gezeigt. Die Caches sind darin primär zu untergliedern in Caches L1,L2,L3 der CCPU 2 und Caches 47 der jeweiligen Rechenstufen 5, wobei in der vorliegenden Erfindung speziell letztere eine spezielle Struktur aufweisen.

Die Steuer CPU 2 (CCPU) kann in einer Ausführungsform in weiten Teilen analog zu einer der bekannten Rechnerarchitekturen ausgebildet sein, welche speziell mit einem Terminierungsverfahren von zeitlich dehnbaren Echtzeitprozessoren und mehreren, nach außen verlängerten Steuerbussen ergänzt wird.

Die seitengemischten Daten- und/oder Code- Caches 47 sind außen um den Recheneinheiten-Ring 3a,3b,3c,3d oder zwischen diesem und der CCPU 2 angeordnet. Letztere Anordnung kann das Laden von Seiten für die CCPU 2 beschleunigen und ein Ring kann dann z.B. im Wesentlichen den gesamten Außenbereich der Chipfläche einnehmen. Dabei können in einer Ausführungsform die Daten- und Befehlsseiten gemischt in L4 Caches vorliegen oder in einer anderen Ausführungsform wie beispielhaft in den Abbildungen gezeigt, die MU an einem In-Cache und einem Out-Cache hängen und der L4 Cache nur die Befehlstabellen vorhalten.

Für Befehle vor deren Zuordnung ist dabei der L1 Cache in der Steuer CPU 2 ausgebildet, aus welchem Befehlswörter in eine Rechenstufe 5 gesammelt in Form von Seiten (Pages) in deren L4 Cache eingesetzt werden. Dabei kann der L1 Cache nur wenige Seiten enthalten. Vorzugsweise werden dabei in dem L1 Cache Daten- und Programmcode-Seiten, wobei einzusetzende Befehle aus der Perspektive der CCPU als Daten gelten, voneinander getrennt abgelegt. Dies kann eine Zuteilung von Seiten auf den Rechenstufen 5 sowie eine Aufgliederung in Programmcode-Seiten und Daten-Seiten in den Rechenstufen 5 erleichtern.

Eine derartige Seite kann z.B. in einem gemischten L2 Cache auch einen Header aufweisen, welcher die gespeicherte Seite als Daten oder Befehle identifiziert. Dieser Header kann z.B. in Form von zumindest zwei Seitenbits ausgebildet sein. Weiterhin können vom Paging verwendete Seitenmarkierungen gespeichert werden, wie z.B. "invalid", "referenced", usw.

In einer Ausführungsform füllt ein Betriebssystem vor jedem Programmstart mithilfe der CCPU 2 einen Teil des RAM Hauptspeichers 9 mit den ersten Seiten eines auszuführenden Programmes und bereitet die Strukturen in den Rechenstufen 5 vor. Dabei könne z.B. auch andere Speicher-Seiten (Pages) auf den Rechenstufen 5 vorzeitig verdrängt werden und/oder eine Prüfung auf eine derzeitige Konsistenz aller Abläufe erfolgen.

Dabei kann die CCPU 2 mit einem eigenen Koordinationsbefehlssatz ausgebildet sein, welcher z.B. vom Compiler anhand des Aufgabencodes gebildet wird. Es ist möglich eigene, komplexe Standard Combination Execution (SCE) zuvor über Programmierung festzulegen, indem die Befehle der komplexen Operation auf einer extra Seite dargestellt und durch einen Befehl im Programmcode in Echtzeit aufgerufen werden. Dabei holt die MU 4 mit der PMMU 46 aus dem L4-Cache 47 eine Seite welche eine SCE Befehlsfolge aufweist. Um ein derartiges, gesondertes Laden zu erlauben, weist die CCPU einen speziellen Steuerbefehl auf. Dabei kann in vielen Ausführungsformen das Befehlsformat das im Ring die Daten fließen lässt ein anderes sein, als jenes welches die CCPU für ihre Steuerungsmaßnahmen für den Ring zum Funktionieren bringt und die CCPU anweist. In einer beispielhaften Ausführungsform kann damit etwa ein RISC-V Befehlssatz um entsprechende Befehle erweitert werden.

In einer Ausführungsform kann es dabei zwischen den Multiple Instruction Single Data (MISD) Rechenstufen 5 auch je einen Bypass geben, sodass jede Rechenstufe 5 über deren MU 4 mit mehr als nur der nächsten Rechenstufe - in einer speziellen Ausführungsform insbesondere mit jeder anderen und mit sich selbst - direkt verbunden werden kann, insbesondere um Ergebnisse, Codeseiten oder Datenseiten weiterzuleiten. Eine derartige Ausführungsform stellt dabei ein sogenanntes vollassoziatives Netz ("Fullassociative Network" - FN) dar.

Zusätzlich kann erfindungsgemäß im Befehlssatz ein zweiter Nulloperations-(Nop)-Befehl mit einer einstellbaren Haltedauer für jeden Befehl für jedes Rechenwerk 5 ausgebildet sein, bei welchem dieses Rechenwerk 5 den Eingangsdatenstrom als Ausgangsdatenstrom durchlässt, falls die Planung einen Stillstand (Stall) in der nächsten Rechenstufe 5 im Ring feststellt. Dadurch kann das vollassoziatives Netz FN vereinfacht werden, weil eine Haltedauer von 1 den Befehl genau im nächsten Schritt durchlässt. Erfindungsgemäß werden die Befehle für die Recheneinheiten 3 dabei nicht direkt von der CCPU 2 angewiesen, sondern jeder einzelne von der zugehörigen MU 4, sodass diese MU 4 aufgrund von Signalen der CCPU 2 in den Programmablauf eingreifen kann.

Für die Befehlsarchitektur der CCPU 2 kann zum Beispiel ein RISC Befehlssatz erweitert werden, wobei dieser Befehlssatz insbesondere dazu ausgebildet sein kann, dass dieser spezielle Befehle bereitstellt, mit welchen Daten auf externe Strukturen geladen werden, speziell auf die MUs 4 und/oder deren PMMU 46 oder lokalen Cache 47. Zu den erweiterten Befehlen kann z.B. ein Setzen einer Seite in eine MU 4 und deren Kommunikation, ein Sammeln aller Ergebnisse eines sich teilenden Befehls, allenfalls mit Erstellen von einem neuen verzweigten Threadpfad und Fortberechnung beider Threads und das Zurückgeben und die Pfadprotokollierung der Endergebnisse eines Threads. Der Befehlssatz der CCPU 2, der MU 4 und der komplexen SCE können in einer Ausführungsform dabei vorzugsweise zumindest im Wesentlichen dieselben oder untergeordnete Elemente einer an der CCPU 2 unterstützen Teilmengen des Befehlssatzes sein. Dabei kann der Befehlsraum für MUs und die CCPU gegebenenfalls getrennt behandelt werden.

Ein Multiple Instruktion Single Data (MISD) Befehlssatz der CCPU 2 kann beispielsweise zumindest einen der folgenden Befehle bereitstellen:

- Verlinken von Threads zu Daten und Befehlen, und Laden und Speichern von Thread Seiten durch den Linker, sowie Signalüberprüfung von Flags;

- Kontrolle der Latenzprioritäten von Threads und deren Befehlen in der MU 4;

- Automatisierung eines "Thread Fork()" im Sinne des Trennens von Datenströmen (z.B. wie weiter oben erläutert);

- Unterstützung für ein analoges Trennen von einfachen Datenströmen aufgrund von Entscheidungen und Vorausberechnung von true/false Entscheidungen von noch nicht ermittelten Wahrheitswerten;

- Automatisierung einer Befehlsweiterleitung durch einen Multiplexer durch Koordinationsrichtlinien, welche von der CCPU 2 in der MU 4 gesetzt und vorbereitet werden;

- Befehle für eine automatisierte Präemtion von Speicher-Seiten und Threads sowie Sub-Threads, insbesondere damit kein Thread verhungert und die Gerechtigkeit anderen Datenströmen die Möglichkeit eröffnet zu rechnen -> z.B. ein Signal Check zu Deadlock und Lifelock an die CCPU 2, sowie relative Aktivität des Threads mit Fehlercodebehandlung;

- Kontrollbefehle für Caches und Seitenwechsel sowie Koordination zwischen den verschiedenen Caches, insbesondere mit Bereitstellung einer Option dabei ein außergewöhnliches Laden von Seiten in andere Caches und Cacheebenen zu erzwingen.

- Befehle für ein Erstellen von Baumergebnissen für alle Verzweigungen des Programms, welche Baumergebnisse z.B. für eine Zurückverfolgung von Fehlern bereitgestellt werden.

Dabei können die ursprünglichen Befehle des Maschinencodes in RISC kodiert sein und über eine Erweiterung möglichst komplexe SCE-Befehle für Sequenzen, welche öfter verwendet werden, bereitgestellt werden. In einer Ausführungsform mit einer derartigen Bereitstellung von Befehlen mit höherer Komplexität kann dabei der Datentransfer zur Ansteuerung der Rechenstufen 5 minimiert werden. Auch hat die Dekodierung der Befehle aufgrund der Auslagerung ohnehin ein höheres Leistungspotential, welches für derartige komplexe Befehle genutzt werden kann. Dabei kann eine Abwägung in der Auslegung z.B. auch primär beim Rechendurchsatz liegen und nicht bei der Reaktionsgeschwindigkeit.

Eine Befehls-Dekodierung in der IE 37 kann dabei auch mit einer Pipeline ausgebildet sein.

Sind für eine Abarbeitung eines Befehls in einer Rechenstufe 5 noch nicht die nötigen Ergebnisse aus anderen Berechnungen eingetragen, wird dieses von der MU 4 schon vorab festgestellt, und die MU 4 lädt diesen Befehl erst gar nicht in die Recheneinheit 3, sondern einen anderen Befehl, welcher schon Vollständig zur Ausführung bereit ist. Im Gegensatz zu herkömmlichen Rechnern deren Ablaufsteuerung auf Thread-Ebene abgewickelt wird, werden entsprechend der vorliegenden Erfindung die einzelnen Befehle "bereit zur Ausführung" (und nicht nur ganze Threads mit einer Vielzahl von Befehlen). Über diese erfindungsgemäße Betrachtung von einzelnen Befehle wird ein Thread oder Sub-Thread eines Prozesses sozusagen nur implizit zur Ausführung bereit. Damit kann z.B. in vielen Fällen ein sogenanntes "busy waiting" vermieden werden.

Erfindungsgemäß können Threads von der MU auf Befehl der CCPU in Kombination mit zu diesem Thread noch ausstehenden Befehlen von der CCPU global geprüft werden, dabei besonders für Schleifen auch auf ihre Bedingungen geprüft werden. Falls ein bedingtes Ereignis nicht mehr eintreten kann, wird dabei der gesamte Thread automatisch mit einem Fehlerzustand oder Unterbrechungszustand terminiert, welcher dann über die CCPU 2 - sozusagen im Hintergrund - behandelt wird, während die entsprechende Rechenstufe 5 sich ohne Unterbrechung der nächsten Aufgabe widmet.

Zum eindeutigen Nachvollziehen eines Verzweigungsablaufes, kann der SteuerProzessor CCPU 2 nach abgeschlossener Berechnung jeder auszuführenden

Seite die während der Ausführung durchgeführten Sprünge und Entscheidungsteile über ein Betriebssystem der Rechnerarchitektur 1 dokumentieren, wobei diese Verzweigungen bereits durch den Compiler markiert und vorbereitet vorliegen können, sodass nur noch die entsprechenden Ergebnisse der Verzweigungen von der CCPU 2 an den entsprechenden Stellen eingetragen werden.

Weiterhin kann der Steuerprozessor CCPU 4 die Verteilung der Threadseiten speichern und eine Auflistung aller in den Befehls-Stacks der Rechenstufen 5 offenen Befehle bereitstellen und die Rechenstufen 5 den Threadseiten zuordnen, insbesondere ohne dabei die Abarbeitung des Programmcodes durch die Rechenstufen 5 zu stören. Beispielsweise kann damit bei einem Suchen eines speziellen Befehls der verantwortliche Seitenblock festgestellt werden. Bei einer externen Weiterleitung von Threadseiten zwischen der Rechenstufen 5 wird die CCPU 2 dabei von der MU 4 darüber informiert, woraufhin die CCPU 2 diese Information in Ihrer lokalen Verwaltung des Programmablaufs nachführt.

In **Fig. 4** ist ein Beispiel eines schematischen Aufbaus einer Ausführungsform einer erfindungsgemäßen Management Unit 4 (MU) im Detail dargestellt.

Eine Primäre Aufgabe der MU 4 ist es, den Datenfluss zwischen den Recheneinheiten 3, also speziell vom Eingang 40, von einer vorangehenden Recheneinheit im Ring zu einer nachfolgenden Recheneinheit 3 im Ring über den Ausgang 45 durchzuführen. Durch die MU 4 werden die Befehle des eigentlichen Programmes für jeden Eingang einer Recheneinheit 3 getrennt und auf den vollassoziativen Befehls-Stack je Recheneinheit 3 gelegt. Insbesondere kann der Befehls-Stack dabei auch als ein jeweils eigener Stack je Eingang ausgebildet sein. Bei der Verteilung der Befehle des Programmcodes wird dabei strategisch anvisiert, dass ein darauffolgender Befehl in die jeweils folgende Recheneinheit 3 der nächsten Rechenstufe 5 geplant wird, und bei der Ausführung des Programmcodes entsprechend die von den Befehlen verarbeiteten Daten jeweils im Ring 7 zwischen der Rechenstufen 5 weitergereicht werden. Sind für einen Befehl noch nicht die nötigen Ergebnisse der vorangehenden Berechnungen - auf welchen Daten der aktuelle Befehl aufbaut - eingetragen, lädt die MU diesen aktuellen Befehl nicht, sondern einen anderen Befehl, welcher bereits zur Ausführung bereit ist. Dabei kann die MU 4 z.B. einen Befehls- und/oder Daten-Stack für ein Rechenwerk der Recheneinheit 3 befüllen.

In einer Ausführungsform kann eine MU 4 speziell ausgebildet sein mit:

- einem Cache-In 41 welcher eingehenden Daten aufnimmt, ausgebildet zum Zwischenspeichern und Puffern von Bytestromdaten und Seiten nach Strategien wie z.B. FIFO, LIFO oder sonstigen ursprünglich bekannten aus der Prozessstrategie, welche hier für die Speicherstrategie eingesetzt werden,
- einer Verarbeitung 42, ausgebildet für die Interpretation (IE) und Ausführung (EE) der Befehle
- einem Cache-Out 43, ausgebildet zum zwischenspeichern großer Seiten, die nicht mit einem Schlag übertragen werden können, sowie zur Stall-Behandlung, und
- einem Multiplexer 44 (MUX) ausgebildet zur Bereitstellung von ausgehenden Daten

  ○ an die der MU zugehörige Recheneinheit oder Rechenstufe mit einer EE an der diese den Befehl auf die richtige Recheneinheit zuweist,
  ○ an den Ring zu einer nächsten MU,
  ○ an die Steuer CPU oder
  ○ an eine PMMU.

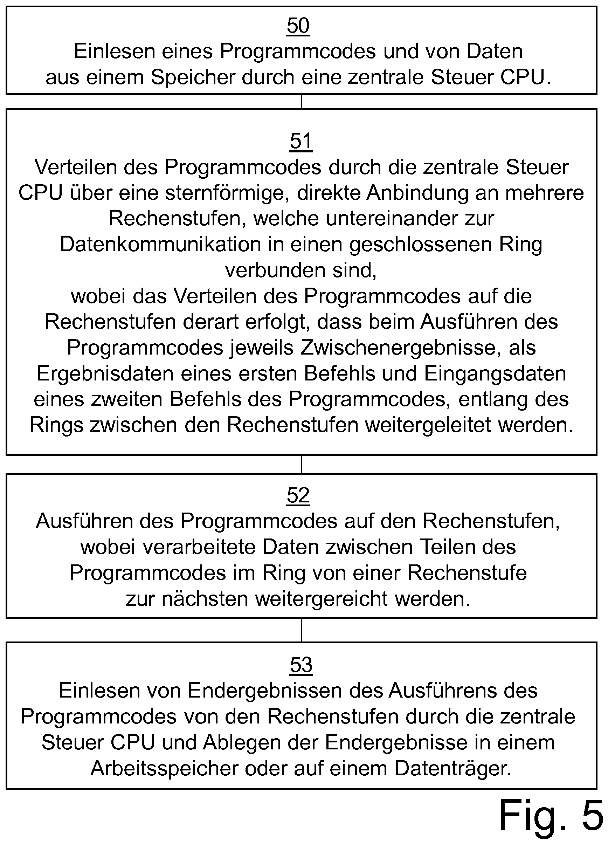

**Fig. 5** zeigt ein Blockdiagramm einer Ausführungsform eines erfindungsgemäßen Verfahrens oder einer erfindungsgemäßen Methode, speziell zur.

In Block 50 erfolgt ein Einlesen eines Programmcodes und von Daten aus einem Speicher durch eine zentrale Steuer CPU.

In Block 51 erfolgt ein Verteilen des Programmcodes durch die zentrale Steuer CPU über eine sternförmige, direkte Anbindung der zentralen Steuer CPU an mehrere Rechenstufen. Diese Rechenstufen sind untereinander zur Datenkommunikation in einen geschlossenen Ring verbunden. Dabei erfolgt das Verteilen des Programmcodes auf die Rechenstufen derart, dass beim Ausführen des Programmcodes jeweils Zwischenergebnisse, als Ergebnisdaten eines ersten Befehls des Programmcodes und als Eingangsdaten eines zweiten Befehls des Programmcodes, entlang des Rings zwischen den Rechenstufen weitergeleitet werden. Die Befehle oder Blöcke von Befehlen werden dabei also z.B. sukzessive entlang des Rings verteilt, wobei auch insbesondere bedingte Verzweigungen und Ablaufvarianten des Programmcodes bei der Auswahl und Konfiguration der Verteilung von Blöcken von Befehlen berücksichtigt werden, um eine hohe Parallelität der Abarbeitung erzielen zu können.

In Block 52 erfolgt ein Ausführen des Programmcodes auf den Rechenstufen, wobei verarbeitete Daten zwischen Teilen des Programmcodes im Ring von einer Rechenstufe zur nächsten weitergereicht werden.

In Block 53 erfolgt ein Einlesen von Endergebnissen des Ausführens des Programmcodes von den Rechenstufen durch die zentrale Steuer CPU und Ablegen der Endergebnisse im Arbeitsspeicher oder auf einem Datenträger, z.B. im RAM, oder auf einem Datenspeichermedium wie einer HDD oder SSD.

In anderen Worten, anhand eines Beispiels eines Programmcodes mit Bezug auf eine Ausführungsform einer erfindungsgemäßen Prozessorarchitektur 1 - beispielsweise in einem C++ ähnlichen Compiler - kann dabei ein neuer Befehl "multiple_fork (<Object_identifier>)" bereitgestellt werden, welcher über ein Template einer beliebigen Variable oder einem Objekt verschiedene Eingaben bei dessen Erstellung zuführt und weitere Ablaufvarianten synchronisiert oder eigene Abläufe zulässt. Jedes Argument "multiple_value (<Object_identifier>, args...)" im nachfolgenden Code erzeugt dabei eine Verzweigung im Code. Ein weiteres Argument kann dann "multiple_out (<Object_identifier>, args...)" sein, welches ein Array aus Zeigern auf die fertig berechneten Objekte ausgibt. Jede der eingesetzten Variablen "args" erzeugt eine weitere Ablaufvariante. Dabei kann ein derartiges, erfindungsgemäßes Verfahren als eine Erweiterung der "p_thread" Klasse zur Handhabung von Threads (auch Aktivitätsträger oder leichtgewichtiger Prozess genannt) als einen Ausführungsstrang oder eine Ausführungsreihenfolge in der Abarbeitung eines Programms als Teil eines Prozesses zur Flusskontrolle ausgebildet sein, wobei aber erfindungsgemäß nicht ganze Adressräume kopiert oder pseudokopiert werden müssen, und sich bei Ausführung des kompilierten Codes nur kleine Codeabschnitte aufteilen.

Als Beispiel zur Erläuterung kann etwa folgender C++ ähnlicher Pseudocode herangezogen werden:

```
int i=1, j=2, a=0;
/* Markiere a als synchron in einzelne, sogenannte Stränge (=Strings) threadtrenn-
bares Element
entspricht etwa "a+=multiple_value(a,i,j);", also ein Zweig i und ein Zweig j;
"\|<...>\|" spricht an der Stelle mehrere gleiche Objekte oder fundamentale Ele-
mente an */
a+=\|i,j\|
System.out.println("a="+a|i,j,<...>|);
/* Ausgabe von Ergebniszweigen von a mit der Variation von i und der Variation
von j;
Ergebnis: "a=\|1,2\|";
Es gibt für dasselbe Problem zwei Lösungen. Übertragen in einen jeweiligen String
werden die Ergebnisse logisch getrennt */
System.out.println("a="+a|i|);
/* Ergebnis: "a=\|1\|"*/
System.out.println("a="+a);
/* Ergebnis: "a=\|1\|";
Ergebnis: "a=\|1,2\|" (automatisch)*/
```

Das Ergebnis in diesem Beispiel ist sowohl 1 als auch 2. Dieses bedeutet zum Beispiel, dass erfindungsgemäß zu einem bestehenden Kontext verschiedene Varianten durchprobiert werden können, die zu einer Anzahl von n neuen Zweigen im Ablauf der Rechnerarchitektur führen. Die Ausführungen der Varianten sind dabei aber dennoch keine jeweils eigenständigen Threads, weil die Variation sich innerhalb eines einzigen Threads schließen kann. Eine derartige Untergliederung eines einzigen Threads durch die "multiple_fork" -Anweisung kann dabei auch als "String-Thread" bezeichnet werden.

Die Anweisung "multiple_out" kann dabei weiterhin als Array[] ausgelesen werden, um Ergebnisse der einzelnen String bei Bedarf in sequentieller Form fortzuführen oder wieder zusammenzuführen. Analog dazu kann in einer anderen Ausführungsform die Eingabe von Verzweigungen auch über ein Array[] erfolgen, beispielsweise mit "a+=\|[i,j]\|"

Dabei kann eine Informationsverarbeitung in zwei Ebenen beispielsweise wie folgt ablaufen. Ein exemplarisches Beispiel eines möglichen Funktionsablaufes in einer Ausführungsform einer erfindungsgemäßen Prozessorarchitektur kann beispielsweise wie folgt ablaufen:

1. Laden eines Programmblocks von einer Festplatte oder einem RAM in den L2 der CCPU.

2. CCPU lädt Programmseite in L4 MU, nach Anweisung der CCPU findet sie sofort die richtige mit dem ersten Befehl, speziell nach dem hier beschriebenen Befehlsformat.

3. MUs laden L4 Programmseite von CCPU und melden Status «geladen» an CCPU.

4. CCPU sendet Daten zu Übernahme: Thread ID, initiale Daten zur Übernahme an alle Rechenstufen.

5. MU lädt ersten Befehl aus internem Puffer und füllt den Befehl mit benötigten Datenvariablen aus L4.

6. CCPU gibt Startfreigabe an den Thread, sobald alle Vorbereitungen getroffen sind.

7. IE Interpretiert Befehl(e), überprüft freie Rechenwerke. Insbesondere wird dabei auch eine Befehlsseite mit Standard Combination Execution Befehlen (SCE) erstellt, wiederholt das erste Element gepoppt, bis kein Spezialbefehl «fork» mehr gefunden werden kann und die resultierende Befehlsseite mit der Länge n-1 an die nächste Rechenstufe geschickt, welche wieder das erste Element poppt und diesen Befehl in der internen Registrierung einträgt und nach L4 zurückschreibt, die Seite weiter schickt usw., womit eine Art Selbstkonfiguration des Rings erfolgt.

8. EE legt Kommando und die Eingabewerte auf die Richtige Recheneinheit.

9. Die Recheneinheit gibt das Ergebnis nach einigen internen Pipeline Schritten aus und puffert es auf dem Cache-Out, z.B. im Format Register 0x****:{Ergebnis, Folgebefehlsnummer, Folgerechenstufe, Thread ID}. Bei mehreren Ausgaben kann die MU dabei auch eine Nachricht «fork» an die CCPU melden, z.B. mit {Thread, new Child, Befehlsnummer}, sodass die CCPU den Überblick über alle Prozesse und Beziehungen bewahren kann.

10. Die MU von Rechenstufe n+1 registriert, dass deren Puffer nicht leer ist.

11. Die MU lädt die Daten/das Datenfeld und sucht nach verfügbaren Befehlen, z.B. im Round Robin Prinzip über alle Seiten aus L4.

12. Die MU findet einen passenden Befehl und hält die passende Seite weiterhin in ihrem internen Speicher. Bei einem Befehlszusatz X_MERGE{Out, Thread1, Thread2, RegisterIn1, RegisterIn2, Folgerechenstufe} können Datenflüsse wieder auf Thread1 der angegebenen beiden Threads auf erweiterte Operationen jeder Art vereint werden und dies der CCPU bekanntgegeben werden. Die MU wartet bis beide Daten vorhanden sind. Die MU packt das neue Ergebnis automatisch auf das korrekte Holregister der Seite. Der Compiler hat dabei garantiert den richtigen Befehl auf einer Seite im MU Speicher für diesen Schritt vorrätig bereitgestellt.

13. Schritt 3 und folgende werden wiederholt, bis der letzte Befehl erreicht ist und die MU auf der Befehlsseite einen KILL Befehl vorfindet.

14. MU meldet Thread ID mit Nachricht «done» an CCPU.

15. CCPU sendet Nachricht «get» mit der Thread ID an alle MUs mit relevanten Ausgabeinformationen in Umgekehrter Reihenfolge. Damit kann ein Baumstapel der Daten erstellt werden, welche der CCPU durch den Programmcode und die eigene Planung des Ablaufes auf den Rechenstufen bekannt sind.

16. CCPU erstellt ausgefüllte Programmklassen zur Thread- und Verzweigungs-Übersicht für den Benutzer und legt diese auf der Festplatte oder dem RAM ab.

Jeder Befehl, um ein Zwischenergebnis auf den Stack zu legen oder ein neu erstellter oder zusammengeführter Thread, stellt für die CCPU ein zu speicherndes Label dar und ist von Anfang an als solches markiert. Die CCPU sucht sich bereits bei der Verteilung die entsprechenden Stellen an Befehlen heraus und findet mit dem MUs die entsprechenden Speicherstellen von Variablen, um einen Konsistenz-Baum zu bauen.

Beispielsweise sind erfindungsgemäß neue, sogenannten "interparallelen Abläufe" eines Threads in mehreren Threads eines Prozesses ablaufen zu lassen, welche sich alle gemeinsam einen Adressraum teilen. Zum Beispiel kann

$$x = (-b \pm \sqrt{b - 4\,a\,c})\,/\,2\,a$$

echtzeitparallel mit darauffolgenden Entscheidungen verarbeitet werden, oder es können höhere komplexe Gleichungen parallel in einem Thread verarbeitet und Grundlagen wie die mathematische Polynom Division (z.B. für das Abschätzen von Nullstellen in mehrdimensionalen Systemen) schneller und hochparallel Ergebnisse liefern.

Eine beispielhafte Ausführung kann dabei etwa wie folgt ablaufen.

1. Ein sogenanntes "Split-Modul" spaltet oder separiert die Daten und die Befehle des Programmcodes, insbesondere im L2-Cache und/oder im L4-Cache falls es dort gemischte Seiten gibt. Wenn die Programmeingabe des Benutzers einerseits eine gemischte Situation beim Start liefert, bei welcher die Seiten erst getrennt voneinander erstellt werden müssen, trennt das Split-Modul Befehle und Konstanten, und erkennt benötigte Speicherstellen für Variablen, die in die MUs eingesetzt werden müssen. Um im Verlauf Abstürze möglichst zu vermeiden, kann dabei eine dynamische beim Durchlaufen Speicherallokation möglichst vermieden werden. Der Speicher kann dabei in Form von Dummy-Variablen vorbereitet sein und die Befehlswörter des Programmcodes erhalten die entsprechenden, richtigen Registrierungsnummern der Daten. Wenn a mit b verrechnet wird, so müssen diese Variablen über deren Ort auffindbar sein (siehe hierzu auch das Befehlsformat weiter oben). Das Split Modul ist dabei vorzugsweise ein Software- und/oder Hardware-Teil der CCPU.

2. Die CCPU 2 vergibt einen Thread-Tag auf allen beteiligten Seiten oder Byteströmen und Variablen in den Caches der Rechenstufen 5, um einen Datenfluss zu identifizieren und setzt die Datenseiten im Rechenstufen-Stack getrennt vom Programmcode-Stack (von unten nach oben wachsend) in einen logisch separaten Daten-Stack (von oben nach unten wachsend) mit den Eingangsvariablen des Programmes ein, und Verknüpft die auszuführenden Befehle mit den bereits vorhandenen Daten auf dem Daten-Stack. Dabei wird vorzugsweise die jeweils am wenigsten belastete Rechenstufe 5 gewählt.

3. Die CCPU 2 startet das Programm und überlässt es sich selbst auf dem Ring der Rechenstufen. Da die CCPU 2 dabei primär nur Befehle verwaltet und einsetzt, ist diese dabei im allgemeinen schneller als der Umschaltbedarf der Rechenwerke 3 und Rechenstufen 5. Damit keine Ergebnisse verloren gehen, werden "dirty" Seiten ständig mit geringer Priorität - speziell z.B. bei Exceptions, Verdrängung der Seiten aus der PMMU 46, Ablauf eines Zeitgebersignals oder bei einem IO Aufruf an die CCPU 2 - mit einer Echtzeitpriorität an die CCPU 2 zurückgeschrieben. Das Speichern wird dabei vorzugsweise über die MU 4 mit den gespeicherten Tags automatisiert durchgeführt.

4. Während der zeitlich unabhängigen Befehlsverarbeitung auf jede Rechenstufe 5 wird das Ergebnis der jeweiligen Berechnung auf einen Out-Cache-Bereich in einem Daten-Stack im Cache 47 der Rechenstufe 5 gelegt. Finden sich im Befehls-Stack der nächsten Rechenstufen bei einer RISC 3-Adressmaschine zwei valide Tags (Rohdaten für den nächsten Befehl) in dessen Daten-Cache für den Folgebefehl, wird der Folgebefehl an die nächste freie und zuständige Recheneinheit 3 in der nächsten Rechenstufe 5 übergeben. Falls es sich um einen konstanten Wert handelt, wurde der Compiler bereits damit beauftragt, diesen einzusetzen.

Die CCPU 2 ist dabei derart ausgebildet und konfiguriert, dass keiner der beteiligten Stacks überläuft, bzw. vor einem allfälligen Überlauf Speicherseiten aus dem Stack 47 L4 ausgewechselt werden, z.B. in einen Cache L1,L2,L3 der CCPU 2 oder allenfalls in den RAM 9. Auf der anderen Seite ist die CCPU 2 dabei auch derart ausgebildet und konfiguriert, dass diese verhindert, dass ein Thread mangels Daten in seiner Ausführung gehindert wird und sozusagen "verhungert". Findet sich zum Beispiel kein passendes Datenpaar bei einem Befehl welche zur Ausführung bereit sind in einer Rechenstufe 5, wird die Speicher-Seite vorerst von der MU 4 auf den Befehls-Stack getauscht, also ein sogenanntes Paging durchgeführt, insbesondere ohne dass derartiges explizit von der CCPU angestoßen wird. Weiterhin kann jeder der Tags also Befehlsnummer oder Befehlsfeld mit einem Zähler aufweisen, welcher erfasst, wie lange dieser im Verhältnis zu berechneten Rechendurchgängen oder FLOPs schon festhängt. Damit lässt sich z.B. eine Fehlertoleranz bestimmen und/oder es lässt sich eruieren ob und wo ein Deadlock auftritt.

Die Taktfrequenz eines im Cache nach ausführbaren Befehlen suchenden MU 4-Nebenprozessors kann beispielsweise auch wesentlich höher sein, als die CCPU 2 Taktfrequenz, da sich kleinere Hardwarestrukturen viel einfacher optimieren lassen - teile und herrsche. Durch die Arbeitsteilung in der erfindungsgemäßen Prozessorarchitektur 1 entsteht eine erweiterte komplexe Pipeline. Das erfindungsgemäße System kann dabei insbesondere als ein Offer-Demand System ausgebildet sein. Die erfindungsgemäße Lösung verknüpft fortlaufend aktuell vorhandene Daten, und bearbeitet dabei stets mögliche und bereits vorhanden Kombinationen zuerst und parallel - insbesondere wenn keine Abhängigkeiten oder Konflikte auftreten, auch ungeachtet einer im ursprünglichen Programmcode implizierten Reihenfolge der Befehle. Das bedeutet, jeder Befehl in einer Recheneinheit verfügt über eine eigens optimierte Pipeline. Das Ergebnis kann dabei in unabhängig langen und jeweils optimierten Pipelinestufen zuerst gepuffert werden, und dann durch einen sogenannten Cache Manager der PMMU 46 in einen Übergangscache zwischen zwei Rechenstufen 5 eingepflegt werden.

Die im Ring folgende Rechenstufe 5 verarbeitet dieses Ergebnis infolge weiter, wenn wiederum alle notwendigen Daten für die Verarbeitung in dieser folgenden Rechenstufe vorhanden sind.

Das Band dieser Fabrikmethode wird stets automatisch befüllt und entleert sich selbst ins Lager, in welchem die Daten auf den nächsten Verarbeitungsschritt warten. Es ist möglich, ein Löschen von Seiten aus dem Out-Cache zu unterbinden, um ein weiteres Mal ein Datenpaar - also solche Daten, welche durch die Ausführung eines vorhandenen Befehls miteinander verknüpft werden - zu finden und zu verarbeiten. So entstehen einfache Verarbeitungsbäume. Bei einer Verzweigung werden ganz einfach beide Varianten verarbeitet und im selben Schritt mit unterschiedlichen Thread IDs und Seiten versehen. Dabei können z.B. Sub Threads mit anderen Thread IDs der CCPU gemeldet werden, sodass diese feststellen kann, dass diese noch zum ursprünglichen Thread gehören, jedoch unter einer Fork laufen, aber es sich dennoch um denselben Programmcode und somit derselbe Thread handelt.

5. Während der Abarbeitung hat die Steuer-CPU 2 bereits einen Return-Befehl in alle Caches 47 auf dem Ring gesetzt, falls das Ergebnis zurückgeschrieben werden soll und das Programm legitim terminiert. Sendet eine MU 4 das Signal, dass ein Thread fertiggestellt wird, so wird in der CCPU 2 ein Systemaufruf erzeugt, der den zuzuordnenden Thread identifiziert und alle Ergebnisseiten zurückschreibt, sowie alle Programmcode-Seiten des Threads auf allen externen Mechanismen zum Überschreiben und/oder Verdrängen freigibt. Wird dieses Signal empfangen, so wird das bekannte Ablauf-Tag der zu speichernden Daten in den äußeren Caches 47 gesucht und die Steuer-CPU 2 lenkt eine Umleitung auf den eigenen L1 Cache mit einer oder mehreren validen Rücksprungadressen. Auf einer Seite des zuzuordnenden Threads werden alle Kind-Ergebnisse protokolliert und die Entscheidungswege über das Betriebssystem berechnet, die Teil der CCPU 2 ist. So gibt es immer n verschiedene Ergebnisse für Verzweigungen, die durch die CCPU 2 als variable Baumstruktur auf die Seite im RAM 9 oder sofort in einen Hauptdatenspeicher, insbesondre per externem IO-Interface, geschrieben wird. Insgesamt ist zu beachten, dass zuerst möglichst alle Seiten aus dem Ring der Rechenstufen 5 in die CCPU 2 geholt werden und die Rechenstufen 5 so schnell und so weit wie möglich freigegeben wird, um Rechenkapazitäten freizuschalten.

**Patentansprüche**

1. Mikroprozessorarchitektur (1) eines Digitalrechners, insbesondere ausgebildet auf einem Halbleiter-Chip, welche aufweist:

   ■ eine Mehrzahl von Rechenstufen (5), welche jeweils ausgebildet sind mit

     ◦ einer Recheneinheit (3) mit zumindest einem Rechenkern (31,32,33,34), welcher zur mathematischen oder logischen Verarbeitung von Daten entsprechend eines Befehlssatzes ausgebildet ist, und
     ◦ einer Management Unit (4) (MU), welche ausgebildet ist, um die Daten und einen Programmcode für die Recheneinheit (3) bereitzustellen,

   ■ wobei die Rechenstufen (5) derart angeordnet und ausgebildet sind, dass mittels der MUs (4) eine Datenkommunikation zwischen den Rechenstufen (5) in einem geschlossenen Ring ausgebildet ist, insbesondere in einem geschlossenen Daisy Chain Ring mit Punkt-zu-Punkt-Verbindungen zwischen den MUs (4), sowie
   ■ einem zentralen Prozessorkern (6) mit einer Steuer-CPU (2) (CCPU), welcher sternförmig mit jeder der Rechenstufen (5) über deren MU (4) verbunden ist, und

   welcher derart ausgebildet und konfiguriert ist, um den Programmcode und diesem zugehörige Daten aus einem externen Speicher (9) über die MUs (4) derart auf die Mehrzahl von Rechenstufen (5) zu verteilen, dass bei der Verarbeitung des Programmcodes aufeinanderfolgende, abhängige Berechnungen jeweils auf im Ring aufeinanderfolgende Rechenstufen (5) verteilt werden, und die zu verarbeitenden Daten im Ablauf des Programmcodes in dem geschlossenen Ring von einer ersten der Rechenstufen (5) zu einer nächsten der Rechenstufen (5) im Ring weitergeleitet werden.

2. Mikroprozessorarchitektur (1) nach Anspruch 1, **dadurch gekennzeichnet, dass** das aus dem Programmcodes eines einzelnen Threads ein erster Befehl auf einer ersten der Rechenstufen (5) ausgeführt wird und ein nachfolgender zweiter Befehl auf einer zweiten der Rechenstufen (5) ausgeführt wird, wobei Daten eines Zwischenergebnisses zwischen der ersten und zweiten Rechenstufe (5) weitergeleitet werden.

3. Mikroprozessorarchitektur (1) nach Anspruch 1 oder 2, **dadurch gekennzeichnet, dass** die MUs (4) jeweils mit einer Paged Memory Management Unit (46) (PMMU) und einem individuellen L4 Cache Speicher (47) ausgestaltet sind, welche derart ausgebildet sind, dass diese, vorzugsweise unabhängig von der Recheneinheit (3), insbesondere im Falle eines Thread-Wechsels, temporär von der Recheneinheit (3) nicht benötigte Speicherseiten in den individuellen Cache Speicher (47) auslagern und/oder benötigte Speicherseiten aus dem individuellen Cache Speicher (47) nachladen.

4. Mikroprozessorarchitektur (1) nach Anspruch 3, **dadurch gekennzeichnet, dass** die CCPU (2) über die MUs (4) die Speicherseiten in den jeweiligen individuellen Cache Speicher (47) entsprechend der Verteilung des Ablaufs des Programmcodes mit einem entsprechenden Teil des Programmcodes und/oder der Daten vorlädt, insbesondere unabhängig von der Abarbeitung des Ablaufs des Programmcodes durch die Recheneinheit (3) und von der Weiterleitung der Daten zwischen den Rechenstufen (5).

5. Mikroprozessorarchitektur (1) nach zumindest einem der Ansprüche 1 bis 4, **dadurch gekennzeichnet, dass** die CCPU (2) zumindest ein Level an lokalem Cache-Speicher aufweist, vorzugsweise zwei oder drei oder mehr Level an lokalem Cache-Speicher in der CCPU (2), und
die CCPU (2) mit einem spezialisierten Prozessorkern (20) ausgebildet ist, dessen Befehlssatz derart ausgebildet ist, dass dieser zur schnellen Verwaltung und zum Transfer von Daten optimiert ist.

6. Mikroprozessorarchitektur (1) nach zumindest einem der Ansprüche 1 bis 5, **dadurch gekennzeichnet, dass** beim Ablauf des Programmcodes ein Datenfluss der zu verarbeitenden Daten entlang des Rings zwischen den Rechenstufen (5) erfolgt, wobei,
vorzugsweise unabhängig davon, ein Steuerfluss von der CCPU (2) zu den Rechenstufen (5) erfolgt, und
wobei die MU (4) derart ausgebildet ist, den Datenfluss und den Steuerfluss weiterzuleiten,
wobei die MU (4) eine Verwaltung und Koordination von Datenfluss und den Steuerfluss über eine Kommunikation mit der CCPU (2), der EE (36), der IE (37), sowie der Rechenstufe (5) aufgrund des Programmcodes eines auszuführenden Programmes bereitstellt.

7. Mikroprozessorarchitektur (1) nach zumindest einem der Ansprüche 1 bis 6, d**adurch gekennzeichnet, dass** die Recheneinheit (3) ausgebildet ist mit zumindest einem Rechenkern von

- einer Arithmetic Logical Unit 34 (ALU)
- einer Floating Point Unit (33) (FPU),
- einer Feldrechner Unit (32) (FR) und/oder
- einer Logischen Einheit (31) (LE), sowie

einer Execution Engine (36) (EE), ausgebildet zum Laden der Registersätze der Rechenkerne von einem Stack, und einer Interpreting Engine (37) (IE), ausgebildet zum predecodieren von komplexen Standardkombinationsbefehlen, welche vorzugsweise über einen gemeinsamen internen Bus der jeweiligen Recheneinheit (3) miteinander und mit der zugehörigen MU (4) verbunden sind, insbesondere wobei der interne Bus über die MU (4) getrennt vom Ring ausgebildet ist, und für jeden der Rechenkerne jeweils ein Execution Engine (36) (EE) und ein Interpreting Engine (37) (IE) ausgebildet ist.

8. Mikroprozessorarchitektur (1) nach zumindest einem der Ansprüche 1 bis 7, **dadurch gekennzeichnet, dass** die MU (4) ausgebildet ist mit

- einem Cache-in (41) welcher eingehenden Daten (40) aufnimmt, ausgebildet zum Zwischenspeichern und Puffern von Bytestromdaten und Speicherseiten von einer anderen MU (4) oder der CCPU (2),
- einer Verarbeitung (42), ausgebildet für eine Interpretation von Befehle, insbesondere mittels einer Interpreting Engine (37) (IE) und einer Ausführung von Befehlen, insbesondere mittels einer Execution Engine (36) (EE),
- einem cache-out (43), ausgebildet zum Zwischenspeichern von Speicherseiten zur Übertragung an eine andere MU (4) oder die CCPU (2), und
- einem Multiplexer (44) (MUX) ausgebildet zur Bereitstellung von ausgehenden Daten (45)

◦ an die der MU (4) zugehörige Recheneinheit (3),
◦ an den Ring (11) zu einer nächsten MU (4b),
◦ an die Steuer CPU (2) oder
◦ an eine PMMU (46).

9. Mikroprozessorarchitektur (1) nach Anspruch 8, **dadurch gekennzeichnet, dass** die MU (4) ausgebildet ist, um fortlaufend in einem lokalen Programm-Cache (47) jene Befehle des Programmcodes zu markieren, für welche die zu deren Bearbeitung benötigten Daten in einem lokalen Daten-Cache (47) eingetragen sind, und diese markierten Befehle mit den benötigten Daten dann der Recheneinheit (3) zur Ausführung in einem lokalen Stack eines, für den jeweiligen Befehl ausgebildeten Rechenwerks (31,32,33,34) bereitstellt, insbesondere wobei die markierten Befehle von einer EE (36) der Recheneinheit (3) aus dem lokalen Stack zur Ausführung in das Rechenwerk (31,32,33,34) geladen werden.

10. Mikroprozessorarchitektur (1) nach zumindest einem der Ansprüche 1 bis 9, **dadurch gekennzeichnet, dass** die Rechenstufe (5) derart ausgebildet und konfiguriert ist, dass diese einen Befehls-Stack aufweist, welcher von der CCPU (2) befüllt und von der Recheneinheit (3) abgearbeitet wird, und eine Eingangs-Daten-Cache welcher initial von der CCPU (2) und während der Ausführung des Programmcodes über den Ring von einer anderen Rechenstufe (5) befüllt und von der Recheneinheit (3) abgearbeitet wird, wobei die MU (4) mit einem Suchlauf ausgebildet ist, welcher jene Befehle im Befehls-Stack, zu welchen sich alle erforderlichen Daten im Daten-Stack befinden, der Recheneinheit (3) bereitstellt, insbesondere an eine Execution Engine (EE) der Recheneinheit, welche die Befehle und die erforderlichen Daten zur Ausführung in Register eines Rechenkerns lädt.

11. Mikroprozessorarchitektur (1) nach zumindest einem der Ansprüche 1 bis 10, **dadurch gekennzeichnet, dass** die CCPU (2) derart ausgebildet und konfiguriert ist, dass diese Befehls-Maschinencode des Programmcodes aus dem Speicher (9) interpretiert und das Verteilen des Programmcodes auf die Rechenstufen (5), anhand von bedingten Sprünge zu nachfolgenden Rechenstufen mit multiplexer Verzweigung; Schleifen über Rücksprünge auf den nächsten Befehl enthaltende Rechenstufe (5); Verzweigung des Datenstroms auf mehrere Einheiten oder Zusammenführung startverwandter Rechenströme auf eine Listenverkettung erfolgt.

12. Mikrochip oder Prozessor, ausgebildet mit einer Mikroprozessorarchitektur (1) nach zumindest einem der Ansprüche 1 bis 11.

13. Verfahren zur Ausführung eines, insbesondere parallelen und verzweigten, Programmcodes auf einem Digitalrechner, insbesondere mit einer Prozessorarchitektur (1) nach einem der Ansprüche 1 bis 11, mit

- einem Einlesen des Programmcodes und Initialdaten vom einem externen Speicher (9) durch eine Steuer-CPU (2),
- einem Verteilen von Teilen des Programmcodes und der Initialdaten auf mehrere Rechenstufen (5), welche unter sich zu einem geschlossenen Ring (7) verbunden sind, über eine direkte Verbindung zwischen der Steuer-CPU (2) und einer jeden der den Rechenstufen (5),
- wobei das Verteilen des Programmcodes derart erfolgt, dass voneinander abhängige, aufeinanderfolgende Berechnungen auf Rechenstufen (5) verteilt werden welche im Ring (7) aufeinanderfolgen, und
- wobei beim parallelen Ausführen der Berechnungen in den Rechenstufen (5) in dem geschlossenen Ring () ein Übergeben der, von einer Rechenstufe (5a) berechneten Ergebnisse als Zwischenergebnisse an eine folgende Rechenstufe (5b) erfolgt, welche diese Ergebnisse mit dem ihr verteilen Programmcode weiterverarbeitet, insbesondere unabhängig von der Steuer-CPU (2), und
- einem Zurücklesen von Endergebnissen und/oder Fehlermeldungen des Ausführens des Programmcodes von den Rechenstufen (5) und einem Ablegen dieser in den externen Speicher (9) durch die Steuer-CPU (2).

14. Verfahren nach Anspruch 13, **dadurch gekennzeichnet, dass** das Übergeben von Daten im Ring (7) und/oder zwischen der Steuer-CPU (2) und der Rechenstufe (5), sowie ein Verwalten des Programmcodes und der Daten in den Rechenstufen (5) durch eine Management Unit (4) (MU) erfolgt, insbesondere wobei die Rechenstufe (5) hierzu eine Programm Memory Management Unit (46) (PMMU) und einen lokalen Cache-Speicher (47) (L4) zur Verwaltung von Daten und Programmcode aufweist.

15. Verfahren nach Anspruch 14, **dadurch gekennzeichnet, dass** das Ausführen des Programmcodes in den Rechenstufen (5) mit einem Suchen von Kombinationen von ausführbaren Programmbefehlen und zugehörigen Daten im lokalen Cache Speicher und einem Bereitstellen dieser auf einem Programm- und Daten-Stack zur Abarbeitung durch ein Rechenwerk (31,32,33,34) der Rechenstufe 5 erfolgt, welches unabhängig von den Berechnungen der Rechenstufen (5) durch eine Execution Engine (36) (EE) der MU (4) erfolgt.

Fig. 1

Fig. 2

Fig. 3

Fig. 4

50
Einlesen eines Programmcodes und von Daten
aus einem Speicher durch eine zentrale Steuer CPU.

51
Verteilen des Programmcodes durch die zentrale Steuer
CPU über eine sternförmige, direkte Anbindung an mehrere
Rechenstufen, welche untereinander zur
Datenkommunikation in einen geschlossenen Ring
verbunden sind,
wobei das Verteilen des Programmcodes auf die
Rechenstufen derart erfolgt, dass beim Ausführen des
Programmcodes jeweils Zwischenergebnisse, als
Ergebnisdaten eines ersten Befehls und Eingangsdaten
eines zweiten Befehls des Programmcodes, entlang des
Rings zwischen den Rechenstufen weitergeleitet werden.

52
Ausführen des Programmcodes auf den Rechenstufen,
wobei verarbeitete Daten zwischen Teilen des
Programmcodes im Ring von einer Rechenstufe
zur nächsten weitergereicht werden.

53
Einlesen von Endergebnissen des Ausführens des
Programmcodes von den Rechenstufen durch die zentrale
Steuer CPU und Ablegen der Endergebnisse in einem
Arbeitsspeicher oder auf einem Datenträger.

Fig. 5

Europäisches
Patentamt

European
Patent Office

Office européen
des brevets

## EUROPÄISCHER RECHERCHENBERICHT

Nummer der Anmeldung

EP 19 18 7372

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | DE 101 34 981 A1 (AATZ FRANK [DE]) 13. Februar 2003 (2003-02-13) * Abbildungen 1, 3 * * Absatz [0138] - Absatz [0145] * ----- | 1-15 | INV. G06F15/173 G06F15/80 G06F12/02 |
| A | US 2003/177273 A1 (NAKAMURA TOMOHIRO [JP] ET AL) 18. September 2003 (2003-09-18) * Absatz [0051] - Absatz [0055]; Abbildungen 1, 3 * ----- | 1 | |

RECHERCHIERTE
SACHGEBIETE (IPC)

G06F

Der vorliegende Recherchenbericht wurde für alle Patentansprüche erstellt

| Recherchenort | Abschlußdatum der Recherche | Prüfer |
|---|---|---|
| Den Haag | 16. Januar 2020 | Filip, Liviu |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
 
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 18 7372

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-01-2020

| Im Recherchenbericht angeführtes Patentdokument | Datum der Veröffentlichung | Mitglied(er) der Patentfamilie | Datum der Veröffentlichung |
|---|---|---|---|
| DE 10134981 A1 | 13-02-2003 | KEINE | |
| US 2003177273 A1 | 18-09-2003 | JP 2003271574 A<br>US 2003177273 A1 | 26-09-2003<br>18-09-2003 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4644466 A
- US 5289577 A
- US 7454411 B
- US 4972338 A
- US 5907867 A
- US 6115814 A
- US 2011231857 A
- US 5689679 A
- US 5724406 A
- US 6374286 B
- US 5815727 A
- US 5706466 A
- US 7653906 B
- US 2004111546 A
- DE 3707585